# EUROPEAN PATENT APPLICATION

(11) **EP 3 932 674 A1**
(43) Date of publication of application: **05.01.2022**
(21) Application number: 20763519.4
(22) Date of filing: 17.02.2020
(51) Int. Cl.: B41J 2/01, C09D 11/32, B41M 5/00, C09B 67/46

(54) **DISPERSION LIQUID COMPOSITION FOR INK, AND INK COMPOSITION**

(30) Priority: 25.02.2019 JP 2019032004
(71) Applicant: Nippon Kayaku Kabushiki Kaisha, Tokyo 100-0005 (JP)
(72) Inventor: SASAKI Keijyou, Tokyo 115-8588 (JP); MIYAZAWA Yoshimasa, Tokyo 115-8588 (JP); HANAZATO Akitsu, Tokyo 115-8588 (JP); HIGUCHI Hiroko, Tokyo 115-8588 (JP)
(74) Representative: Parchmann, Stefanie
(86) International application number: PCT/JP2020/005981
(87) International publication number: WO 2020/175204

(57) **Abstract**

Provided are: a dispersion liquid composition for ink containing a non-water-soluble coloring agent, a water-soluble polysaccharide compound, a multivalent metal salt, a dispersant, and water; and an ink composition containing the dispersion liquid composition for ink. Also provided are an ink-jet printing method using the ink composition, an ink-jet printed article printed by the ink-jet printing method, a sublimation transfer dyeing method using the ink-jet printed article, and a sublimation transfer dyed article dyed by the sublimation transfer dyeing method.

## Description

### TECHNICAL FIELD

The present invention relates to a dispersion liquid composition for ink and an ink composition.

### BACKGROUND ART

As digitalization of information progresses, ink-jet printers have been widely used as printers for office and home use. In recent years, many applications for commercial printing, textile printing, and the like have been progressed. As the applications of ink-jet printers have expanded, a variety of coloring matters, including water-soluble coloring matters such as acidic dyes, direct dyes, etc. and water-insoluble coloring matters such as disperse dyes, pigments, etc. have come to be used depending on the application.

The disperse dyes are widely used for industrial dyeing of hydrophobic fibers such as polyesters, and they are used for dyeing in a state in which they are dispersed in a dye bath or colored size. A dye infiltrates and diffuses in a dispersed state into an inside of a fiber under high temperature conditions, and is attached to a fiber by way of hydrogen bonding, intermolecular force, or the like between the fiber and the dye. When dispersibility of the dye, especially dispersibility at high temperature is poor, the dye aggregates in the high-temperature dyeing bath, thereby easily generating specs on the fibers. For this reason, conventionally for fiber dyeing, dispersants excellent in high temperature dispersibility, for example, anionic dispersants, such as formaldehyde condensates of lignosulfonic acid, formaldehyde condensates of alkylnaphthalenesulfonic acid, formaldehyde condensates of creosote oil sulfonic acid, etc. have been mainly used.

Ink-jet printing of polyester fibers in which disperse dyes are used has also been carried out and direct printing and thermal transfer printing have been put into practical use: in the former, a dye ink is applied (printed) to fibers and then heat treatment such as steaming is performed to fix the dye; and in the latter, a dye ink is applied (printed) to an intermediate transfer medium (special transfer paper) and subsequently the dye is sublimated and transferred from the intermediate recording medium side to the fiber side by heat. To disperse dye inks used in these printing methods, anionic dispersants which are used conventionally for industrial dyeing have been used (see Patent Documents 1 and 2).

However, according to our studies, it was found that these anionic dispersants had problems in sedimentation stability in dispersion liquids, and also in discharge stability of an ink prepared by using the anionic dispersants. Further, in Patent Document 3, in which a dispersant represented by formula 1 was used, it was found that discharge stability was good, but still there was a problem in sedimentation stability (storage stability).

In order to expand the field of application of printing processes using inks, inks to be used for ink-jet printing and the resulting-colored objects are required to have high color development and various types of fastness such as light resistance, water resistance, and the like. Further, ink compositions to be used in ink-jet printing are strongly required to have storage stability and to be able to be redissolved or redispersed in water after being dried. In particular, inks using disperse dyes are required to have storage stability. It is generally known that a dye does not exist in an ink as a molecule but exists in a dispersed state as particles, and a sedimentation phenomenon occurs over time due to aggregation of dye particles. Therefore, an ink which has poor storage stability has a problem that a concentration gradient occurs in the ink, and desired printing properties cannot be obtained, or aggregated particles clog the nozzles, thereby preventing the ink from being discharged, in the worst case. There is a demand for development of an ink composition that is excellent in various types of fastness, and has high printing image density and good storage stability, but nevertheless, it is the status quo that there are still few products with satisfactory performance.

As the ink using a pigment, an ink of Patent Document 6 can be mentioned. This is an ink for which a dispersion liquid was prepared by using a polymer dispersant. Patent Document 5 discloses an ink using a self-dispersing type pigment. Recently, microcapsule pigments using a selfassembling pigment are widely considered as a means for solving the problem. Patent Document 8 discloses a method for producing such a pigment. None of the inks, however, have yet satisfied needs of the market.
Patent Document 1: Japanese Unexamined Patent Application, Publication No. H9-291235
Patent Document 2: Japanese Unexamined Patent Application, Publication No. H8-333531
Patent Document 3: Japanese Unexamined Patent Application, Publication No. 2003-246954
Patent Document 4: Japanese Patent No. 3534395
Patent Document 5: Japanese Patent No. 4016483
Patent Document 6: Japanese Patent No. 4078679
Patent Document 7: PCT International Publication No. WO2010/013651
Patent Document 8: Japanese Patent No. 2675956
Patent Document 9: Japanese Patent No. 3839829
Patent Document 10: PCT International Publication No. WO2014/129322
Patent Document 11: PCT International Publication No. WO2013/115071
Patent Document 12: Japanese Unexamined Patent Application, Publication No. 2018-119022
Patent Document 13: Japanese Unexamined Patent Application, Publication No. 2015-63586
Patent Document 14: Japanese Patent No. 4406093
Patent Document 15: Japanese Patent No. 3454024

### DISCLOSURE OF THE INVENTION

### Problems to be Solved by the Invention

It is an object of the present invention to provide a dispersion liquid composition for ink which is excellent in storage stability and which can form an ink having excellent storage stability, and to provide an ink composition containing the dispersion liquid composition for ink.

### Means for Solving the Problems

As a result of extensive studies to solve the above problems, the present inventors have completed the following first to seventeenth aspects of the present invention.

A first aspect of the present invention relates to a dispersion liquid composition for ink, containing a water-insoluble coloring matter, a water-soluble polysaccharide compound, a polyvalent metal salt, a dispersant, and water.

A second aspect of the present invention relates to the dispersion liquid composition for ink as described in the first aspect, in which the water-insoluble coloring matter includes at least one selected from the group consisting of a disperse dye and an oil-soluble dye.

A third aspect of the present invention relates to the dispersion liquid composition for ink as described in the first or second aspect, in which the water-soluble polysaccharide compound includes at least one selected from the group consisting of alginic acid compounds, pectin compounds, carrageenan compounds, carboxymethylcellulose compounds, and agar.

A fourth aspect of the present invention relates to the dispersion liquid composition for ink as described in any one of the first to third aspects, in which the polyvalent metal salt includes a salt of at least one metal selected from the group consisting of Ca, Mg, Ti, Al, Zn, Fe, Co, Ni, and Cu.

A fifth aspect of the present invention relates to the dispersion liquid composition for ink as described in any one of the first to fourth aspects, in which the dispersant includes at least one selected from the group consisting of an anionic dispersant, a nonionic dispersant, and a polymer-based dispersant.

A sixth aspect of the present invention relates to the dispersion liquid composition for ink as described in the fifth aspect, in which the anionic dispersant includes at least one selected from the group consisting of a formalin condensate of a β-naphthalenesulfonate salt, a formalin condensate of an alkylnaphthalenesulfonate salt, and a formalin condensate of creosote oil sulfonate salt.

A seventh aspect of the present invention relates to the dispersion liquid composition for ink as described in the fifth or sixth aspect, in which the nonionic dispersant includes at least one selected from the group consisting of ethylene oxide adducts of phytosterols and ethylene oxide adducts of cholestanols.

An eighth aspect of the present invention relates to the dispersion liquid composition for ink as described in any one of the fifth to seventh aspects, in which the polymer-based dispersant includes a styrene-(meth)acrylic copolymer.

A ninth aspect of the present invention relates to the dispersion liquid composition for ink as described in any one of the first to eighth aspects, further containing a defoaming agent.

A tenth aspect of the present invention relates to the dispersion liquid composition for ink as described in any one of the first to ninth aspects, further containing a water-soluble organic solvent.

An eleventh aspect of the present invention relates to the dispersion liquid composition for ink as described in any one of the first to tenth aspects, further containing a preservative.

A twelfth aspect of the present invention relates to the dispersion liquid composition for ink as described in any one of the first to eleventh aspects, in which the dispersion liquid composition for ink contains particles each including the water-insoluble coloring matter, the water-soluble polysaccharide compound, and the polyvalent metal salt, and in which a number average particle diameter of the particles is 10 to 500 nm.

A thirteenth aspect of the present invention relates to an ink composition containing the dispersion liquid composition for ink as described in any one of the first to twelfth aspects.

A fourteenth aspect of the present invention relates to an ink-jet printing method, including performing printing by adhering a droplet of an ink to a recording medium using an ink-jet printer, in which the ink composition as described in the thirteenth aspect is used as the ink.

A fifteenth aspect of the present invention relates to an ink-jet printed article printed by the ink-jet printing method as described in the fourteenth aspect.

A sixteenth aspect of the present invention relates to a sublimation transfer dyeing method, including:
heating the ink-jet printed article as described in the fifteenth aspect and,
sublimating the water-insoluble coloring matter applied to the ink-jet printed article and transferring the water-insoluble coloring matter thus sublimed to an object to be dyed.

A seventeenth aspect of the present invention relates to a sublimation transfer dyed article dyed by the sublimation transfer dyeing method as described in the sixteenth aspect.

### Effects of the Invention

According to the present invention, it is possible to provide a dispersion liquid composition for ink which is excellent in storage stability and which can form an ink having excellent storage stability, and to provide an ink composition containing the dispersion liquid composition for ink.

### PREFERRED MODE FOR CARRYING OUT THE INVENTION

### <Dispersion liquid composition for ink>

The dispersion liquid composition for ink according to the present embodiment contains a water-insoluble coloring matter, a water-soluble polysaccharide compound, a polyvalent metal salt, a dispersant, and water. The dispersion liquid composition for ink according to the present embodiment is excellent in storage stability and when an ink is prepared using the dispersion liquid composition for ink, the ink also has excellent storage stability. Although the reason for this is not clear, the present inventors speculate as follows. Generally used anionic dispersants are considered to be poor in dispersion stability against heat or time, because of weak adsorption force to water-insoluble colorants. On the other hand, in the dispersion liquid composition for ink according to the present embodiment, the water-insoluble coloring matter is considered to be incorporated into an aggregate generated by aggregation of the water-soluble polysaccharide compound and the polyvalent metal salt, and as a result, the dispersion stability is improved.

Hereinafter, each component contained in the dispersion liquid composition for ink according to the present embodiment will be described in detail. Note that one type of each of the components described below may be used alone, or two or more types thereof may be used in combination.

### [Water-insoluble coloring matter]

Examples of the water-insoluble coloring matter include dyes and pigments, and dyes are preferred.

Examples of dyes include direct dyes, vat dyes, sulfur dyes, dispersion dyes, basic dyes, naphthol dyes, acidic dyes, acid mordant dyes, mordant dyes, oil soluble dyes, reactive dyes, soluble vat dyes, sulfur vat dyes, oxidation dyes, and the like. Examples of dyes include: C.I. Disperse Yellow 3, 4, 5, 7, 8, 9, 13, 23, 24, 30, 33, 34, 39, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 186, 192, 198, 199, 200, 202, 204, 210, 211, 215, 216, 218, 224, 232, and 237; C.I. Disperse Orange 1, 1:1, 3, 5, 7, 11, 13, 17, 20, 21, 23, 25, 29, 30, 31, 32, 33, 37, 38, 42, 43, 44, 45, 47, 48, 49, 50, 53, 54, 55, 56, 57, 58, 59, 60, 61, 66, 71, 73, 76, 78, 80, 86, 89, 90, 91, 93, 96, 97, 118, 119, 127, 130, 139, and 142; C.I. Disperse Red 1, 4, 5, 7, 11, 12, 13, 15, 17, 27, 43, 44, 50, 52, 53, 54, 55, 55:1, 56, 58, 59, 60, 65, 70, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 158, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 283, 288, 298, 302, 303, 310, 311, 312, 320, 323, 324, 328, 359, and 364; C.I. Disperse Violet 1, 4, 8, 11, 17, 23, 26, 27, 28, 29, 31, 33, 35, 36, 38, 40, 43, 46, 48, 50, 51, 52, 56, 57, 59, 61, 63, 69, 77, and 97; C.I. Disperse Green 9; C.I. Disperse Brown 1, 2, 4, 9, 13, and 19; C.I. Disperse Blue 3, 5, 7, 9, 14, 16, 19, 20, 26, 26:1, 27, 35, 43, 44, 54, 55, 56, 58, 60, 62, 64, 64:1, 71, 72, 72:1, 73, 75, 77, 79, 79:1, 82, 83, 87, 91, 93, 94, 95, 64:1, 96, 102, 106, 108, 112, 113, 115, 118, 120, 122, 125, 128, 130, 131, 139, 141, 142, 143, 145, 146, 148, 149, 153, 154, 158, 165, 165:1, 165:2, 167, 171, 173, 174, 176, 181, 183, 185, 186, 187, 189, 197, 198, 200, 201, 205, 207, 211, 214, 224, 225, 257, 259, 266, 267, 270, 281, 284, 285, 287, 288, 291, 293, 295, 297, 301, 315, 330, 333, 341, 353, 354, 358, 359, 360, 364, 365, 366, and 368; C.I. Disperse Black 1, 3, 10, and 24; C.I. Solvent Yellow 114; C.I. Solvent Orange 67; C.I. Solvent Red 146; C.I. Solvent Blue 36, 63, 83, 105, and 111; C.I. Reactive Yellow 2, 3, 18, 81, 84, 85, 95, 99, and 102; C.I. Reactive Orange 5, 9, 12, 13, 35, 45, and 99; C.I. Reactive Brown 2, 8, 9, 17, and 33; C.I. Reactive Red 3, 3:1, 4, 13, 24, 29, 31, 33, 125, 151, 206, 218, and 226; C.I. Reactive Violet 1 and 24; C.I. Reactive Blue 2, 5, 10, 13, 14, 15, 15:1, 49, 63, 71, 72, 75, 162, and 176; C.I. Reactive Green 5, 8, and 19; C.I. Reactive Black 1, 8, 23, and 39; C.I. Acid Yellow 1, 3, 11, 17, 18, 19, 23, 25, 36, 38, 40, 42, 44, 49, 59, 61, 65, 72, 73, 79, 99, 104, 110, 159, 169, 176, 184, 193, 200, 204, 207, 215, 219, 220, 230, 232, 235, 241, 242, and 246; C.I. Acid Orange 2, 3, 7, 8, 10, 19, 24, 51, 56, 67, 74, 80, 86, 87, 88, 89, 94, 95, 107, 108, 116, 122, 127, 140, 142, 144, 149, 152, 156, 162, 166, and 168; C.I. Acid Brown 2, 4, 13, 14, 19, 28, 44, 123, 224, 226, 227, 248, 282, 283, 289, 294, 297, 298, 301, 355, 357, and 413; C.I. Acid Red 1, 6, 8, 9, 13, 18, 27, 35, 37, 52, 54, 57, 73, 82, 88, 97, 106, 111, 114, 118, 119, 127, 131, 138, and 143; C.I. Acid Violet 17, 19, 21, 42, 43, 47, 48, 49, 54, 66, 78, 90, 97, 102, 109, and 126; C.I. Acid Blue 1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, and 350; C.I. Acid Green 9, 12, 16, 19, 20, 25, 27, 28, 40, 43, 56, 73, 81, 84, 104, 108, and 109; C.I. Acid Black 1, 2, 3, 24, 26, 31, 50, 52, 58, 60, 63, 107, 109, 112, 119, 132, 140, 155, 172, 187, 188, 194, 207, and 222; C.I. Direct Yellow 2, 3, 4, 9, 10, 11, 12, 13, 15, 16, 50, 66, 73, 84, 86, 87, 88, 89, 91, 110, 127, 128, 129, 130, 132, 138, 139, 141, 142, and 145; C.I. Direct Orange 20, 25, 35, 38, 39, and 41; C.I. Direct Brown 187, 195, 196, 202, 208, 209, 210, and 213; C.I. Direct Red 76, 88, 89, 92, 101, 209, 220, 222, 224, 225, 226, 227, 234, 235, 238, 240, 243, 245, and 247; C.I. Direct Blue 52, 55, 57, 76, 80, 84, 86, 87, 92, 102, 105, 106, 108, 110, 112, 197, 199, 200, 202, 205, 220, 231, 233, 235, 237, 238, 240, 245, 248, and 250; C.I. Direct Green 55, 57, 59, 60, 77, 80, 82, and 90; C.I. Direct Black 12, 19, 20, 22, 23, 105, 107, 110, 112, 115, 117, 120, 125, 129, 132, 135, and 136; C.I. Basic Yellow 2, 3, 18, 21, 38, 40, 41, 43, 51, 63, 65, 67, and 69; C.I. Basic Blue 2, 10, 37, 41, 43, 50, 55, 57, 60, 66, 69, 72, 75, and 79; C.I. Basic Red 20, 25, 27, 29, 31, 45, 46, 47, and 50; and the like.

Among these dyes, the disperse dyes, the oil-soluble dyes, and the vat dyes are preferred. Examples include C.I. Disperse Yellow 42, 49, 76, 83, 88, 93, 99, 119, 126, 160, 163, 165, 180, 183, 186, 198, 199, 200, 224, and 237; C.I. Disperse Orange 25, 29, 30, 31, 38, 42, 44, 45, 53, 54, 55, 71, 73, 80, 86, 96, 118, and 119; C.I. Disperse Red 73, 88, 91, 92, 111, 127, 131, 143, 145, 146, 152, 153, 154, 179, 191, 192, 206, 221, 258, 283, 302, 323, 328, and 359; C.I. Disperse Violet 26, 35, 48, 56, 77, and 97; C.I. Disperse Blue 27, 54, 60, 73, 77, 79, 79:1, 87, 143, 165, 165:1, 165:2, 181, 185, 197, 225, 257, 266, 267, 281, 341, 353, 354, 358, 360, 364, 365, and 368; and the like. Examples of dyes having thermal transferability (that is, dyes having sublimation property) include C.I. Disperse Yellow 51, 54, 60, 82, and 232; C.I. Disperse Orange 5, 7, 20, 23, 25, and 60; C.I. Disperse Red 4, 11, 50, 53, 59, 60, 239, 240, and 364; C.I. Disperse Violet 8, 11, 17, 26, 27, 28, and 36; C.I. Disperse Blue 3, 5, 26, 35, 55, 56, 72, 81, 91, 108, 334, 359, 360, and 366; C.I. Disperse Brown 27; C.I. Solvent Yellow 114; C.I. Solvent Orange 60 and 67; C.I. Solvent Red 146; C.I. Solvent Blue 36, 63, 83, 105, and 111; and the like.

The dispersion liquid composition for ink according to the present embodiment preferably includes at least one selected from the group consisting of disperse dyes and oil-soluble dyes, more preferably includes at least one selected from the group consisting of disperse dyes having sublimation property and oil-soluble dyes having sublimation property, and most preferably includes at least one selected from the group consisting of C.I. Disperse Yellow 54 and 232; C.I. Disperse Orange 25 and 60; C.I. Disperse Red 60 and 364; C.I. Disperse Violet 27 and 28; and C.I. Disperse Blue 56, 72, 359, 360, and 366.

Meanwhile, the pigments include organic pigments and inorganic pigments, and the organic pigments are preferred. Examples of the pigments include C.I. Pigment Yellow 74, 120, 128, 138, 151, 185, and 217; C.I. Pigment Orange 13, 16, 34, and 43; C.I. Pigment Red 122, 146, and 148; C.I. Pigment Violet 19 and 23; C.I. Pigment Blue 15, 15:1, 15:2, 15:3, 15:4, 15:5, and 15:6; C.I. Pigment Green 7 and 8; and the like.

The water-insoluble coloring matter may be a powdery or lumpy dry coloring matter or a wet cake or slurry. In addition, the water-insoluble coloring matter may contain a small amount of a dispersant such as a surfactant for the purpose of suppressing aggregation of particles of the coloring matter during or after synthesis of the coloring matter. Commercially available water-insoluble coloring matters include grades for industrial dyeing, resin coloring, ink, toner, ink-jet, and the like, and differ from each other in the manufacturing method, purity, particle size, and the like. In order to suppress aggregation after pulverization, those having smaller particles are preferred, and those having as little impurity as possible are preferred from influence on dispersion stability and discharge accuracy of ink.

As the water-insoluble coloring matter, two or more types may be used in combination. For example, when black is to be expressed, an orange dye and a red dye are appropriately blended with a blue dye as a main dye to adjust color tone to black color, and the obtained dye can be used as a black dye. In addition, plural types of dyes may be used in combination for the purpose of finely adjusting color tones of blue, orange, red, violet, black, etc.

The contents of the water-insoluble coloring matter vary depending on the type of water-insoluble coloring matter to be used, the type of solvent or dispersant, and the like, and are not particularly limited. The total content of the water-insoluble coloring matter is usually 0.1 to 25% by mass, preferably 0.5 to 20% by mass, and more preferably 1 to 15% by mass, with respect to the total amount of the dispersion liquid composition for ink. By setting the content of the water-insoluble coloring matter to 0.1% by mass or more, the color development density tends to be sufficient. Further, by setting the content of the water-insoluble coloring matter to 25% by mass or less, the storage stability of the dispersion liquid composition for ink tends to be improved.

### [Water-soluble polysaccharide compound]

As the water-soluble polysaccharide compound, a water-soluble polysaccharide compound having a carboxy group can be preferably used. The water-soluble polysaccharide compound may have one carboxy group in its structure, or may have two or more carboxy groups, or may have in addition to the carboxy group a functional group other than the carboxy group. When the water-soluble polysaccharide compound has two or more carboxy groups, a part thereof may be replaced with another substituent.

Examples of the water-soluble polysaccharide compound include alginic acid compounds, pectic compounds, carrageenan compounds, carboxy methylcellulose compounds, agar, and the like. Examples of the alginic acid compound include alginic acid; alginate salt compounds such as potassium alginate, sodium alginate, ammonium alginate, alginate esters; etc. Examples of the pectic compound include polysaccharides composed of a linear polymer of D-galacturonic acid and the like. A polysaccharide in which a part of the carboxy groups of D-galacturonic acid has been converted into a methyl ester can also be used as long as it has a carboxy group. Examples of the carrageenan compounds include k-carrageenan, Lcarrageenan, and the like.

Of these water-soluble polysaccharide compounds, at least one type selected from the group consisting of alginate compounds, carrageenan compounds, and pectin compounds are preferably contained from the viewpoint of easy gelation by a polyvalent metal salt, which is described below. More preferably, at least one type selected from the group consisting of sodium alginate, k-carrageenan, and pectin is contained, and most preferably sodium alginate is contained.

There is a plurality of types of sodium alginate depending on difference in their structure, degree of polymerization, and the like, and known compounds can be used. In addition, it is also possible to use a commercially available product as sodium alginate. Examples of commercially available products include sodium alginate (manufactured by Junsei Chemical Co., Ltd.); Kimica algin ULV-L3, Kimica algin ULV-L3, SKAT-ULV, and Kimica algin IL-2 (all manufactured by Kimica Corporation); and the like.

The contents of water-soluble polysaccharide compounds vary depending on the molecular weight of the water-soluble polysaccharide compound to be used, and is not particularly limited. The total content of the water-soluble polysaccharide compounds is usually 0.01 to 1.0% by mass, preferably 0.05 to 1.0% by mass, and more preferably 0.1 to 0.8% by mass, with respect to the total amount of the dispersion liquid composition for ink. By setting the content of the water-soluble polysaccharide compound to 0.01% by mass or more, the degree of gelation tends to be sufficient. Further, by setting the content of the water-soluble polysaccharide compound to 1.0% by mass or less, a decrease in storage stability due to thickening tends to be suppressed.

### [Polyvalent metal salts]

Polyvalent metal salts are used for the purpose of crosslinking the water-soluble polysaccharide compounds. Examples of the polyvalent metal salt include salts of at least one metal selected from the group consisting of Ca, Mg, Ti, Al, Zn, Fe, Co, Ni, and Cu. Anions forming the polyvalent metal salts are not particularly limited, and may be inorganic anions such as a halide ion, a hydroxide ion, a sulfate ion, a nitrate ion, or the like or may be an organic anion such as acetic acid, lactic acid, formic acid, or the like. The polyvalent metal salt may be an oxide which decomposes or dissolves after being added to the dispersion liquid composition for ink.

Examples of the polyvalent metal salt comprise a chloride comprising a divalent metal ion, a hydroxide comprising a divalent metal ion, a sulfate salt comprising a divalent metal ion, a nitrate salt comprising a divalent metal ion, etc. Specifically, examples include calcium chloride, calcium chloride dihydrate, calcium chloride tetrahydrate, calcium chloride hexahydrate, calcium sulfate, calcium sulfate dihydrate, calcium lactate, calcium hydroxide, calcium nitrate, calcium nitrate tetrahydrate, calcium acetate, magnesium fluoride, magnesium acetate, magnesium bromide, magnesium formate, magnesium nitrate, magnesium sulfate, titanium chloride, titanium iodide, aluminum chloride, aluminum oxide, aluminum bromide, aluminum iodide, aluminum sulfate, aluminum nitrate, zinc chloride, zinc bromide, iron chloride, cobalt chloride, nickel chloride, copper chloride, lead chloride, lead sulfate, lead hydroxide, lead nitrate, copper sulfate, and the like.

The content of the polyvalent metal salt varies depending on the type of polyvalent metal salt or water-soluble polysaccharide compound to be used, and is not particularly limited. The total content of the polyvalent metal salt is usually 0.01% to 10% by mass, preferably 0.02% to 8% by mass, and more preferably 0.04% to 5% by mass, with respect to the total amount of the dispersion liquid composition for ink. By setting the content of the polyvalent metal salt to 0.01% by mass or more, the degree of gelation tends to be sufficient. Further, by setting the content of the polyvalent metal salt to 10% by mass or less, a decrease in storage stability due to thickening tends to be suppressed.

### [Particles containing water-insoluble coloring matter, water-soluble polysaccharide compound, and polyvalent metal salt]

It is preferable for the dispersion liquid composition for ink according to the present embodiment to contain particles containing a water-insoluble coloring matter, a water-soluble polysaccharide compound, and a polyvalent metal salt. When the particles are contained in the dispersion liquid composition for ink, discharge stability of an ink prepared using the dispersion liquid composition for ink tends to be improved.

The number average particle diameter of the particles is preferably 10 to 500 nm, and more preferably 10 to 300 nm. Further, it is preferable for the particles to have the maximum particle diameter of 900 nm or less. By setting the number average particle diameter to 500 nm or less and setting the maximum particle diameter to 900 nm or less, even in an ink-jet printing method in which ink is discharged from a fine nozzle, generation of clogging is suppressed and stable discharge tends to be possible. Further, by setting the number average particle diameter to 10 nm or more, there is a tendency in which particles are suppressed from aggregating and settling, thereby reducing clogging of the nozzle and the filter. Note that the number average particle diameter can be determined by a commercially available particle size measuring machine using a light scattering method, an electrophoresis method, a laser Doppler method, or the like.

### [Dispersants]

Dispersants preferably comprise at least one type selected from the group consisting of an anionic dispersant, a nonionic dispersant, and a polymer-based dispersant.

Examples of the anionic dispersant include a formalin condensate of a polymer sulfonic acid (preferably an aromatic sulfonic acid), a lignin sulfonic acid, a formalin condensate of lignin sulfonic acid, or a salt thereof or a mixture thereof (hereinafter, unless otherwise specified, "formalin condensate of sulfonic acid" includes a salt or a mixture), a formalin condensate of an alkyl naphthalene sulfonate, and the like. Examples of the salt include sodium salts, potassium salts, lithium salts, etc. Examples of the formalin condensate of aromatic sulfonic acid include formalin condensates of creosote oil sulfonic acid; cresol sulfonic acid; phenol sulfonic acid; β-naphthalenesulfonic acid; β-naphtholsulfonic acid; a mixture of β-naphthalenesulfonic acid and β-naphtholsulfonic acid; a mixture of cresol sulfonic acid and 2-naphthol-6-sulfonic acid; lignin sulfonic acid; and the like. Among these, a formalin condensate of each of creosote oil sulfonic acid, β-naphthalenesulfonic acid, and lignin sulfonic acid is preferred.

The anionic dispersant is available as a commercial product. Examples of the formalin condensate of β-naphthalenesulfonic acid include Demol N (manufactured by Kao Corporation), Lavelin W series (manufactured by DKS Co., Ltd.), and the like. Examples of the formalin condensate of creosote oil sulfonic acid include Demol C (manufactured by Kao Corporation) and the like. Examples of the formalin condensate of a special aromatic sulfonic acid include Demol SN-B (manufactured by Kao Corporation). Examples of the formalin condensate of methylnaphthalenesulfonic acid include Lavelin AN series (manufactured by DKS Co., Ltd.). Among these, Demol N, Lavelin AN series, and Lavelin W series are preferred, Demol N and Lavelin W series are more preferred, and Lavelin W series is the most preferred. Examples of the lignin sulfonic acid include Vanillex N, Vanillex RN, Vanillex G, and Pearlex DP (all manufactured by Nippon Paper Industries Co., Ltd.). Among these, Vanillex RN, Vanillex N, and Vanillex G are preferred.

Examples of the nonionic dispersant include ethylene oxide (EO) adducts of phytosterols and ethylene oxide (EO) adducts of cholestanols. In this specification, "phytosterols" refers to both "phytosterol" and "hydrogenated phytosterol". Examples of the ethylene oxide adducts of phytosterols include ethylene oxide adduct of phytosterol and ethylene oxide adduct of hydrogenated phytosterol. Similarly, "cholestanols" used herein refers to both "cholestanol" and "hydrogenated cholestanol". Examples of the ethylene oxide adducts of cholestanols include ethylene oxide adduct of cholestanol and ethylene oxide adduct of hydrogenated cholestanol. The addition amount of ethylene oxide per mole of phytosterols or cholestanols is about 10 to 50 moles, and those having an HLB of about 13 to 20 are preferred.

The nonionic dispersant is also available as a commercial product. Examples of the ethylene oxide adducts of phytosterols include NIKKOL BPS-20, NIKKOL BPS-30 (all manufactured by Nikko Chemicals Co., Ltd., EO adduct of phytosterol), NIKKOL BPSH-25 (as above, EO adduct of hydrogenated phytosterol), and the like. Examples of the ethylene oxide adducts of cholestanols include NIKKOL DHC-30 (EO adduct of cholestanol, manufactured by Nikko Chemicals Co., Ltd.).

As the polymer-based dispersant, those used in ink-jet inks or the like are preferred, and a copolymeric polymer having a hydrophilic portion and a hydrophobic portion in a molecule is preferred. Specifically, examples of the polymer-based dispersants include: acrylic acid-based dispersants, such as a styrene-acrylic acid copolymer, a styrene-acrylic acid-acrylate ester copolymer, a styrene-methacrylic acid copolymer, a styrene-methacrylic acid-acrylate ester copolymer, etc.; maleic acid-based dispersants, such as a styrene-maleic acid copolymer, an acrylate ester-maleic acid copolymer, a styrene-acrylate ester-maleic acid copolymer, etc.; sulfonic acid-based dispersants, such as an acrylate ester-styrenesulfonic acid copolymer, a styrenemethacrylsulfonic acid copolymer, an acrylate esterallylsulfonic acid copolymer, etc.; polyester-based dispersants, such as a polyester-acrylic acid copolymer, a polyester-acrylic acid-acrylate ester copolymer, a polyester-methacrylic acid copolymer, a polyester-methacrylic acid-acrylate ester copolymer, etc.; or salts thereof, etc.

Among these polymer-based dispersants, a styrene-(meth)acryl copolymer is preferred. The styrene-(meth)acryl copolymer is a copolymer of a styrene-based monomer and a (meth)acrylic monomer. Examples of the copolymer include an (a-methyl)styrene-acrylic acid copolymer, an (α-methyl)styrene-acrylic acid-acrylate ester copolymer, an (α-methyl)styrene-methacrylic acid copolymer, an (α-methyl)styrene-methacrylic acid-acrylate ester copolymer, an (a-methyl)styrene-acrylate ester- maleic acid (maleic anhydride) copolymer, an acrylate ester-styrenesulfonic acid copolymer, and an (a-methyl)styrene-methacrylic sulfonic acid copolymer, etc. Note that "(meth)acryl" is used in this specification as referring to both "acryl" and "methacryl". In addition, "(α-methyl)styrene" is used as referring to both "a-methylstyrene" and "styrene".

The mass average molecular weight of the styrene-(meth)acrylic copolymer is, for example, preferably 1,000 to 20,000, more preferably 2,000 to 19,000, and most preferably 4,000 to 17,000. By setting the mass average molecular weight to 1,000 or more, dispersion stabilizing ability for the water-insoluble coloring matter tends to be improved.

Further, by setting the mass average molecular weight to 20,000 or less, the ability to disperse the water-insoluble coloring matter tends to be improved, and also, thickening tends to be suppressed. The mass average molecular weight of the styrene-(meth)acrylic copolymer is measured by a GPC (gel permeation chromatography) method.

The acid value of the styrene-(meth)acrylic copolymer is, for example, preferably 50 to 250 mgKOH/g, more preferably 100 to 250 mgKOH/g, and most preferably 150 to 250 mgKOH/g. By setting the acid value to 50 mgKOH/g or more, solubility in water is improved, and in addition, the dispersion stabilizing ability for the water-insoluble coloring matter tends to be improved. Further, by setting the acid value to 250 mgKOH/g or less, affinity with an aqueous medium increases, which tends to suppress occurrence of bleeding in an image after printing. The acid value of resin represents the number of mg of KOH required to neutralize 1 g of the resin, and can be measured according to JIS-K3054.

The glass transition temperature of the styrene-(meth)acrylic copolymer is, for example, preferably 45 to 135°C, more preferably 55 to 120°C, and most preferably 60 to 110°C.

The styrene-(meth)acrylic copolymer can also be obtained as a commercially available product. Examples thereof include Joncryl 67, 586, 611, 678, 680, 682, 683, 690, 52J, 57J, 60J, 63J, and 70J, JDX-6180, HPD-196, HPD96J, PDX-6137A, 6610, JDX-6500, JDX-6639, PDX-6102B, PDX-6124 (all manufactured by BASF) and the like. Among these, Joncryl 67 (mass average molecular weight: 12,500, acid value: 213 mgKOH/g), 678 (mass average molecular weight: 8,500, acid value: 215 mgKOH/g), 682 (mass average molecular weight: 1,700, acid value: 230 mgKOH/g), 683 (mass average molecular weight: 4,900, acid value: 215 mgKOH/g), and 690 (mass average molecular weight: 16,500, acid value: 240 mgKOH/g) are preferred.

The dispersant may further include at least one selected from the group consisting of a cationic dispersant and an amphoteric dispersant. Examples of the cationic dispersant include an aliphatic amine salt, an aliphatic quaternary ammonium salt, a benzalkonium salt, a benzethonium chloride, a pyridinium salt, an imidazolinium salt, etc. Examples of the amphoteric dispersant include carboxybetaines, sulfobetaines, aminocarboxylate salts, imidazolinium betaines, and the like.

Examples of the dispersant other than the above include styrene and derivatives thereof, vinylnaphthalene and derivatives thereof, aliphatic alcohol esters of α,β-ethylenically unsaturated carboxylic acids, acrylic acid and derivatives thereof, maleic acid and derivatives thereof, itaconic acid and derivatives thereof, fumaric acid and derivatives thereof, copolymers (block copolymers, random copolymers, graft copolymers, and the like) composed of at least two monomers selected from vinyl acetate, vinyl alcohol, vinylpyrrolidone, acrylamide, and the like (at least one of which is a hydrophilic or water-soluble monomer), and salts thereof.

The total content of the dispersant is usually 1 to 120% by mass, preferably 10 to 100% by mass, and more preferably 20 to 80% by mass, with respect to the total amount of the water-insoluble coloring matter.

### [Water]

As the water, water having fewer impurities such as ion-exchanged water and distilled water are preferred.

### [Other components]

The dispersion liquid composition for ink according to the present embodiment may further contain a defoaming agent. The defoaming agent is a substance having an action of reducing foam in a solution or suppressing foaming itself, and examples thereof include an oily substance (higher alcohol or the like) having low volatility and large diffusion power, and a nonionic surfactant to be described below. Examples thereof include a highly oxidized oil-based, a glycerin fatty acid ester-based, a fluorine-based, and a silicone-based compound.

Further, the dispersion liquid composition for ink according to the present embodiment may further contain a water-soluble organic solvent. Examples of the water-soluble organic solvent include C1 to C4 alcohols such as methanol, ethanol, propanol, isopropanol, butanol, isobutanol, secondary butanol, tertiary butanol, etc.; carboxylic amides such as N,N-dimethylformamide, N,N-dimethylacetamide, etc.; lactams such as 2-pyrrolidone, hydroxyethyl-2-pyrrolidone, N-methyl-2-pyrolidone, N-methylpyrrolidin-2-one, etc.; cyclic ureas such as 1,3-dimethylimidazolidin-2-one, 1,3-dimethylhexahydropyrimid-2-one, etc.; ketones or ketoalcohols such as acetone, methyl ethyl ketone, 2-methyl-2-hydroxypentan-4-one, etc.; cyclic ethers such as tetrahydrofuran, dioxane, etc.; mono, oligo, or polyalkylene glycol having a C2 to C6 alkylene unit, such as ethylene glycol, 1,2-propylene glycol, 1,3-propylene glycol, 1,2-butylene glycol, 1,4-butylene glycol, 1,6-hexylene glycol, diethylene glycol, triethylene glycol, tetraethylene glycol, dipropylene glycol, polyethylene glycol, polypropylene glycol, thiodiglycol, dithiodiglycol, etc.; polyols (preferably triols) such as trimethylolpropane, glycerin, hexane-1,2,6-triol, etc.; C1 to C4 alkyl ethers of polyhydric alcohols, such as ethylene glycol monomethyl ether, ethylene glycol monoethyl ether, diethylene glycol monomethyl ether, diethylene glycol monoethyl ether, diethylene glycol monobutyl ether (butyl carbitol)triethylene glycol monomethyl ether, triethylene glycol monoethyl ether, etc.; γ-butyrolactone; dimethyl sulfoxide; and the like.

Note that although substances such as trimethylolpropane or the like which are solid at ordinary temperature are also included in the above water-soluble organic solvent, these substances exhibit water solubility even though they are solid, and when they are dissolved in water, they can be used for the same purpose as the water-soluble organic solvent. For this reason, they are described in the category of water-soluble organic solvents in this specification.

Further, the dispersion liquid composition for ink according to the present embodiment may further contain a preservative. The preservative includes, for example, organic sulfur-based, organic nitrogen sulfur-based, organic halogen-based, haloarylsulfone-based, iodopropargyl-based, N-haloalkylthio-based, nitrile-based, pyridine-based, 8-oxyquinoline-based, benzothiazole-based, isothiazoline-based, dithiol-based, pyridinoxide-based, nitropropane-based, organic tin-based, phenol-based, quaternary ammonium salt-based, triazine-based, thiazine-based, anilide-based, adamantanebased, dithiocarbamate-based, brominated indanon-based, benzyl bromoacetate-based, inorganic salt-based compounds, and the like. Examples of the organic halogen-based compounds include sodium pentachlorophenol and the like. Examples of the pyridine oxide-based compounds include 2-pyridinethiol-1-oxide sodium salt and the like. Examples of the isothiazoline-based compounds include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, etc. Examples of other preservatives include anhydrous sodium acetate, sodium sorbate, sodium benzoate, Proxel GXL (S) and Proxel XL-2 (S), trade names of Lonza Corporation.

Further, the dispersion liquid composition for ink according to the present embodiment may further contain an ink preparation agent such as a pH adjusting agent, a chelating reagent, a rust-preventive agent, a water-soluble ultraviolet absorbing agent, a water-soluble polymer compound, a dye dissolving agent, an antioxidant, a surfactant, and the like.

Examples of the pH adjusting agent include alkanolamines such as diethanolamine, triethanolamine, N-methyldiethanolamine, etc.; hydroxides of alkali metals such as lithium hydroxide, sodium hydroxide, potassium hydroxide, etc.; ammonium hydroxide (ammonia water); carbonates of alkali metals such as lithium carbonate, sodium carbonate, sodium hydrogen carbonate, potassium carbonate, etc.; alkali metal salts of organic acids such as potassium acetate, etc.; inorganic bases such as sodium silicate, disodium phosphate, etc.; and the like.

Examples of the chelating reagent include sodium ethylenediamine tetraacetate, sodium nitrilotriacetate, sodium hydroxyethylenediamine triacetate, sodium diethylenetriamine pentaacetate, sodium uracil diacetate, and the like.

The rust-preventive agent includes, for example, hydrogen sulfite salts, sodium thiosulfate, ammonium thioglycolate, diisopropylammonium nitrite, pentaerythritol tetranitrate, dicyclohexylammonium nitrite, and the like.

Examples of the water-soluble ultraviolet absorbing agent include sulfonated benzophenone-based compounds, benzotriazole-based compounds, salicylic acid-based compounds, cinnamic acid-based compounds, triazine-based compounds, and the like.

Examples of the water-soluble polymer compound include polyvinyl alcohol, a cellulose derivative, a polyamine, a polyimine, etc.

Examples of the dye solving agent include urea, ε-caprolactam, ethylene carbonate, etc.

Examples of the antioxidant include organic antioxidants such as hydroquinones, alkoxyphenols, dialkoxyphenols, phenols, anilines, amines, indanes, chromans, alkoxyanilines, heterocyclics, etc.; metal complex-based antioxidants such as nickel complexes, zinc complexes, etc.; and the like.

Examples of the surfactant include known surfactants such as anionic, cationic, amphoteric, nonionic, silicone-based, fluorine-based surfactants, etc.

Examples of the anionic surfactant include alkyl sulfonate salts, alkylcarboxylate salts, α-olefin sulfonate salts, polyoxyethylene alkyl ether acetate salts, N-acylamino acid or salts thereof, N-acylmethyltaurine salts, alkylsulfate salt polyoxyalkyl ether sulfate salts, alkylsulfate salt polyoxyethylene alkyl ether phosphate salts, rosin acid soap, castor oil sulfate ester salts, lauryl alcohol sulfate ester salts, alkylphenol-type phosphate esters, alkyl-type phosphate esters, alkylarylsulfonate salts, diethyl sulfosuccinate salts, diethylhexyl sulfosuccinate salts, dioctyl sulfosuccinate salts, and the like. Examples of commercially available products include hytenol LA-10, LA-12, LA-16, neohytenol ECL-30S, ECL-45, etc., all of which are manufactured by DKS Co., Ltd.

Examples of the cationic surfactant include 2-vinylpyridine derivatives, poly(4-vinylpyridine) derivatives, etc.

Examples of the amphoteric surfactant include lauryldimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, imidazoline derivatives and the like.

Examples of the nonionic surfactant include those based on ether such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ethers, etc.; those based on esters such as polyoxyethylene oleate ester, polyoxyethylene distearate ester, sorbitan laurate, sorbitan monostearate, sorbitan monooleate, sorbitan sesquioleate, polyoxyethylene monooleate, polyoxyethylene stearate, etc.; those based on acetyleneglycols (alcohols) such as 2,4,7,9-tetramethyl-5-decyne-4,7-diol, 3,6-dimethyl-4-octyne-3,6-diol, 3,5-dimethyl-1-hexyn-3-ol, etc.; Surfynol 104, 105, 82, and 465 manufactured by Air Products Japan Co., Ltd., Olfine STG, etc.; those based on polyglycol ethers (e.g., Tergitol 15-S-7 manufactured by SIGMA-ALDRICH).

Examples of the silicone-based surfactant include polyether modified siloxane, polyether modified polydimethylsiloxane, and the like. Examples of commercially available products include BYK347 (polyether-modified siloxane); BYK345 and BYK348 (polyether-modified polydimethylsiloxane), all of which are manufactured by Byk-Chemie GmbH., and the like.

Examples of the fluorine-based surfactant include perfluoroalkyl sulfonate compounds, perfluoroalkyl carboxylate-based compounds, perfluoroalkyl phosphate compounds, perfluoroalkyl ethylene oxide adducts, a polyoxyalkylene ether polymer compounds having a perfluoroalkylether group in its side chain, etc. Examples of commercially available products include Zonyl TBS, FSP, FSA, FSN-100, FSN, FSO-100, FSO, FS-300, Capstone FS-30 and FS-31 (all of which are manufactured by DuPont); PF-151N and PF-154N (both of which are manufactured by Omnova Solutions Inc.); and the like.

### [Method for preparing dispersion liquid composition for Ink]

The dispersion liquid composition for ink according to the present embodiment can be prepared, for example, by the following two methods.

### (First preparation method)

A first preparation method is to obtain the dispersion liquid composition for ink by mixing and dispersing: a dispersion liquid containing a water-insoluble coloring matter, a water-soluble polysaccharide compound, and water, and a dispersion liquid containing a dispersant, a defoaming agent, a preservative, and water, and then mixing and dispersing the resulting dispersion liquid and an aqueous solution containing a polyvalent metal salt, thereby obtaining the dispersion liquid composition for ink.

More specifically, glass beads are added to a mixture obtained by mixing a dispersion liquid containing a water-insoluble coloring matter, a water-soluble polysaccharide compound, and water, and a dispersion liquid containing a dispersant, a defoaming agent, a preservative, and water, and the obtained mixture is subjected to a dispersion treatment using a sand mill for about 15 hours under water cooling. In addition to the sand mill (bead mill), it is possible to use a roll mill, a ball mill, a paint shaker, an ultrasonic disperser, a microfluidizer, or the like for this dispersion treatment. Although the dispersion time is not particularly limited, the dispersion time is preferably set so that the number average particle diameter of the water-insoluble coloring matter is 10 to 500 nm. By setting the dispersion time so that the number average particle diameter is 10 to 500 nm, a decrease in dispersion stability or storage stability of the dispersion liquid composition for ink tends to be suppressed. Note that foaming may occur during the dispersion treatment, but in that case, it is possible to suppress this by adding an ink preparation agent such as a water-soluble organic solvent, a surfactant, etc. Further, if necessary, a defoaming agent such as a silicone-based defoaming agent; acetylene alcohol-based defoaming agent; or the like may be added during the preparation of the dispersion liquid. However, since some of the defoaming agents inhibit dispersion and microparticulation of dyes and the like, it is preferable to use those which do not affect the microparticulation, stability of dispersion liquid, and the like. Preferred defoaming agents include, for example, an Olfine series (SK-14 or the like) manufactured by Nissin Chemical Industry Co., Ltd.; Surfynol series (104, DF-110D, or the like) manufactured by Air Products Japan Co., Ltd.; and the like.

After the dispersion treatment, an aqueous solution containing a polyvalent metal salt is added and the dispersion treatment is performed in the same manner for about 2 hours. Then, the dispersion liquid is filtered through a glass fiber filter paper GC-50 (manufactured by Toyo Roshi Kaisha Ltd., pore diameter: 0.5 µm) to remove components having a large particle size, thereby obtaining a dispersion liquid composition for ink.

### (Second preparation method)

The second preparation method includes mixing two types of dispersion liquids to obtain the dispersion liquid composition for ink.

As a method for preparing a first dispersion liquid, for example, the following method can be mentioned. Firstly, glass beads are added to a mixture obtained by mixing a dispersion liquid containing a water-soluble polysaccharide compound and water, and a dispersion liquid containing a dispersant, a defoaming agent, a preservative, and water, and the obtained mixture is subjected to a dispersion treatment using a sand mill for about 15 hours under water cooling. In addition to the sand mill (bead mill), it is possible to use a roll mill, a ball mill, a paint shaker, an ultrasonic disperser, a microfluidizer, or the like for this dispersion treatment. Although the dispersion time is not particularly limited, the dispersion time is preferably set so that the number average particle diameter of the water-soluble polysaccharide compound is 10 to 500 nm. By setting the dispersion time so that the number average particle diameter is 10 to 500 nm, a decrease in dispersion stability or storage stability of the dispersion liquid composition for ink tends to be suppressed. Note that foaming may occur during the dispersion treatment, but in that case, it is possible to suppress this by adding an ink preparation agent such as a water-soluble organic solvent, a surfactant, etc. Further, if necessary, a defoaming agent such as a silicone-based; acetylene alcohol-based; or the like may be added during the preparation of the dispersion liquid. However, since some of the defoaming agents inhibit dispersion and microparticulation of dyes and the like, it is preferable to use those which do not affect the microparticulation, stability of dispersion liquid, and the like. Preferred defoaming agents include, for example, an Olfine series (SK-14 or the like) manufactured by Nissin Chemical Industry Co., Ltd.; Surfynol series (104, DF-110D, or the like) manufactured by Air Products Japan Co., Ltd.; and the like.

After the dispersion treatment, an aqueous solution containing a polyvalent metal salt is added and the dispersion treatment is performed in the same manner for about 2 hours. Then, the dispersion liquid is filtered through a glass fiber filter paper GC-50 (manufactured by Toyo Roshi Kaisha Ltd., pore diameter: 0.5 µm) to remove components having a large particle size, thereby obtaining the first dispersion liquid.

On the other hand, as the method for preparing a second dispersion liquid, for example, the following method can be mentioned. Firstly, glass beads are added to a dispersion liquid containing a water-insoluble coloring matter, a dispersant, a defoaming agent, a preservative, and water, and subjected to a dispersion treatment using a sand mill for about 15 hours under water cooling. In addition to the sand mill (bead mill), it is possible to use a roll mill, a ball mill, a paint shaker, an ultrasonic disperser, a microfluidizer, or the like for this dispersion treatment. Although the dispersion time is not particularly limited, the dispersion time is preferably set so that the number average particle diameter of the water-insoluble coloring matter is 10 to 500 nm. By setting the dispersion time so that the number average particle diameter is 10 to 500 nm, a decrease in dispersion stability or storage stability of the dispersion liquid composition for ink tends to be suppressed. Note that foaming may occur during the dispersion treatment, but in that case, it is possible to suppress this by adding an ink preparation agent such as a water-soluble organic solvent, a surfactant, etc. Further, if necessary, a defoaming agent such as a silicone-based; acetylene alcohol-based; or the like may be added during the preparation of the dispersion liquid. However, since some of the defoaming agents inhibit dispersion and microparticulation of dyes and the like, it is preferable to use those which do not affect the microparticulation, stability of dispersion liquid, and the like. Preferred defoaming agents include, for example, an Olfine series (SK-14 or the like) manufactured by Nissin Chemical Industry Co., Ltd.; Surfynol series (104, DF-110D, or the like) manufactured by Air Products Japan Co., Ltd.; and the like.

After the dispersion treatment, an aqueous solution containing a polyvalent metal salt is added and the dispersion treatment is performed in the same manner for about 2 hours. Then, the dispersion liquid is filtered through a glass fiber filter paper GC-50 (manufactured by Toyo Roshi Kaisha Ltd., pore diameter: 0.5 µm) to remove components having a large particle size, thereby obtaining the second dispersion liquid.

Then, by mixing the first dispersion and the second dispersion, the dispersion liquid composition for ink can be obtained. Examples of the mixing method include a method in which the second dispersion is added to the first dispersion to be dispersed, a method in which both dispersion liquids are mixed together while stirring, and the like.

The dispersion liquid composition for ink according to the present embodiment hardly causes aggregation, precipitation, and the like of solids even when stored for a long period of time, also has extremely little change in physical properties such as viscosity and average particle diameter, and has good storage stability. Further, the ink composition using the dispersion liquid composition for ink according to the present embodiment is not only excellent in color development but also excellent in various fastness such as light resistance, scratch resistance, gas resistance, chlorine resistance, sweat resistance, and washing fastness, etc. in the printed matter.

### <Ink composition>

The ink composition according to the present embodiment contains the dispersion liquid composition for ink according to the present embodiment described above.

Examples of a method for preparing the ink composition include a method for mixing the dispersion liquid composition for ink according to the present embodiment, a water-soluble organic solvent, water, and, if necessary, an ink preparation agent. The order in which these are mixed is not particularly limited.

The content of the dispersion liquid composition for ink is, for example, 2 to 40% by mass, preferably 3 to 35% by mass, and more preferably 5 to 35% by mass, with respect to the total amount of the ink composition. At this time, it is preferable to adjust the content of the water-insoluble coloring matter to be 0.3 to 10% by mass with respect to the total amount of the ink composition. Further, the total content of the water-soluble organic solvent is typically 5 to 50% by mass, preferably 10 to 50% by mass, more preferably 10 to 30% by mass, and most preferably 10 to 20% by mass, with respect to the total amount of the ink composition. Furthermore, the total content of the ink preparation agent is typically 0 to 25% by mass, and preferably 0.01 to 20% by mass, with respect to the total amount of the ink composition.

After preparation of the ink composition, microfiltration using a membrane filter or the like may be performed. In particular, when the ink composition is used as an ink-jet ink, it is preferable to perform microfiltration for the purpose of preventing clogging or the like of the nozzle. The pore size of the filter used for microfiltration is typically 0.1 to 1 µm, and preferably 0.1 to 0.8 µm.

The pH at 25°C of the ink composition according to the present embodiment is preferably 5 to 11, and more preferably 7 to 10 from the viewpoint of improving storage stability.

In addition, the viscosity at 25°C of the ink composition according to the present embodiment is preferably about 3 to 20 mPa·s when measured by an E-type viscometer from the viewpoint of discharge responsiveness at high speed. Further, the surface tension at 25°C of the ink composition according to the present embodiment is about 20 to 45 mN/m when measured by a plate method. Actually, the viscosity and the surface tension are adjusted to obtain an appropriate physical property value in consideration of the discharge amount, response speed, ink droplet flight characteristics, etc. of the ink-jet printer to be used.

The ink composition according to the present embodiment can be used in various fields, and is suitable for an aqueous writing ink, an aqueous printing ink, an information recording ink, textile printing, and the like. The ink composition according to the present embodiment is preferably used as an ink-jet ink, particularly an ink-jet ink for textile printing.

Note that the ink composition according to the present embodiment can also constitute an ink set in combination with other ink compositions. For example, the ink composition according to the present embodiment and at least one ink composition selected from the group consisting of a yellow ink composition, a magenta ink composition, and a cyan ink composition may be combined into an ink set.

### <Ink-jet printing method and ink-jet printed article as well as sublimation transfer dyeing method and sublimation transfer dyed article>

In the ink-jet printing method according to the present embodiment, the ink composition according to the present embodiment described above is used as an ink, and a droplet of the ink is adhered to a recording medium by an ink-jet printer to perform printing. The ink-jet printed article according to the present embodiment is an article printed by the ink-jet printing method according to the present embodiment.

The recording medium is not particularly limited as long as it can be printed by the ink composition according to the present embodiment. As an example of a preferable recording medium, a fiber containing a hydrophobic resin is mentioned. When the ink-jet printed matter is used in a sublimation transfer dyeing method, which is described below, as an example of a preferable recording medium, an intermediate recording medium, which is described below, may be mentioned.

Further, the sublimation transfer dyeing method according to the present embodiment heats the ink-jet printed article according to the present embodiment, and sublimates and transfers the water-insoluble coloring matter imparted to the ink-jet printed article to an object to be dyed. The sublimation transfer dyed article according to the present embodiment is an article dyed by the sublimation transfer dyeing method according to the present embodiment.

The object to be dyed is not particularly limited as long as it can be dyed by the water-insoluble coloring matter contained in the ink composition according to the present embodiment. As an example of a preferable object to be dyed, a substance selected from fibers comprising a hydrophobic resin, a film, and a sheet may be mentioned.

The ink-jet printing method and the sublimation transfer dyeing method according to the present embodiment are preferably employed when printing hydrophobic fibers. Hereinafter, details of a case where a hydrophobic fiber is printed will be described.

### [Fibers, films, and sheets containing hydrophobic resin]

Examples of the hydrophobic resin include resins such as polyester, nylon, triacetate, diacetate, polyamide, etc. and resins containing two or more types of these resins. Examples of the fibers containing a hydrophobic fiber include, in addition to the fibers consisting of a hydrophobic resin, mixed spun fibers of these fibers with regenerated fibers such as rayon or natural fibers such as cotton, silk, wool, etc. Among the fibers, those having an ink-receiving layer (antibleeding layer) are also known, and such fibers can also be used. The fibers having an ink-receiving layer can be produced by a known method and can also be obtained as a commercially available product. The material, structure, and the like of the ink-receiving layer are not particularly limited, and may be used as appropriate depending upon the purpose and the like. Examples of fabric which is a structure made of fibers containing a hydrophobic resin include satin, tropical, double piquet, microfiber, etc.

Films or sheets containing a hydrophobic resin include polyethylene terephthalate films, polyethylene terephthalate sheets; fabrics, glass, metal, or potteries coated with hydrophobic resins; and the like.

### [Method for printing hydrophobic fibers]

Methods for printing a hydrophobic fiber are roughly classified into a direct printing method and sublimation transfer dyeing method.

### (Direct printing method)

The direct printing method includes a printing step in which an ink composition is used as an ink and a droplet of the ink is adhered to a fiber containing a hydrophobic resin by an ink-jet printer to form a recording image such as a letter or a pattern, a fixing step in which the water-insoluble coloring matter in the droplet of the ink adhered in the printing step to the fiber is fixed to the fiber by heat, and a washing step of washing the unfixed water-insoluble coloring matter remaining in the fiber.

The fixing step is generally performed by known steaming or baking. Examples of the steaming include a method in which a water-insoluble colorant is dyed (also referred to as wet heat fixing) to a fiber by treating the fiber with a high-temperature steamer for about 10 minutes at usually 170 to 180°C, or a high-pressure steamer for about 20 minutes at usually 120 to 130°C. Examples of the baking (thermosol) include a method in which a dye is dyed (also referred to as dry heat fixation) to a fiber by treating the fiber at 190°C to 210°C for about 60 to 120 seconds.

The washing step is a step of washing the obtained fiber with warm water and, if necessary, with ambient temperature water. The warm water or ambient temperature water to be used for washing may contain a surfactant. The washed fiber is also preferably dried, usually at 50 to 120°C for 5 to 30 minutes.

This direct printing method may further include a pretreating step of pretreating the fiber for the purpose of preventing bleeding or the like. Examples of this pretreatment step include a step of imparting an aqueous solution (pretreatment liquid) containing at least a sizing agent and, if necessary, an alkaline substance, a reduction inhibitor, and a hydrotropic agent to a fiber before the ink is adhered.

Examples of the sizing agent include natural gums such as guar, locust bean, etc.; starches; marine algae such as sodium alginate, Gloiopeltis, etc.; plant skin such as pectic acid, etc.; fibrous derivatives such as methyl fibrin, ethyl fibrin, hydroxyethyl cellulose, carboxymethyl cellulose, etc.; processed starch such as carboxymethyl starch, etc.; synthetic glue such as polyvinyl alcohol and polyacrylate esters; and the like. Sodium alginate is preferable.

The alkaline substance includes, for example, alkali metal salts of inorganic acids or organic acids; salts of alkaline earth metals; compounds which liberate alkali when heated; and the like. Alkali metal hydroxides and alkali metal salts are preferable. Examples include alkali metal hydroxides such as sodium hydroxide, calcium hydroxide, etc.; alkali metal salts of inorganic compounds such as sodium carbonate, sodium bicarbonate, potassium carbonate, sodium dihydrogen phosphate, disodium hydrogen phosphate, sodium phosphate, etc.; alkali metal salts of organic compounds such as sodium formate, sodium trichloroacetate, etc.; and the like. Sodium bicarbonate is preferable.

As the reduction inhibitor, sodium meta-nitrobenzenesulfonate is preferable. As the hydrotropic agent, ureas such as urea, dimethylurea, etc. may be exemplified, and urea is preferable.

With regard to the sizing agent, the alkaline substance, the reduction inhibitor, and the hydrotropic agent, any one type may be used alone, or two or more types may be used in combination.

The mixing ratio of each component in the pretreating liquid is, for example, 0.5 to 5% by mass of the sizing agent, 0.5 to 5% by mass of sodium bicarbonate, 0 to 5% by mass of sodium meta-nitrobenzenesulfonate, 1 to 20% by mass of urea, and the balance of water.

Methods of attaching the pretreating liquid to fibers include, for example, a padding method. The aperture ratio of padding is preferably about 40 to 90%, and more preferably about 60 to 80%.

### (Sublimation transfer dyeing method)

A sublimation transfer dyeing method includes a printing step in which an ink composition is used as an ink and a droplet of the ink is adhered to an intermediate recording medium by an ink-jet printer to form a recording image such as a letter or a pattern, and a transfer step in which an ink adhering surface of the intermediate recording medium is brought into contact with a material selected from a fiber, a film, and a sheet, each containing a hydrophobic resin, followed by heat treatment, thereby sublimating the water-insoluble coloring matter in the droplet of the ink adhered to the intermediate recording medium and transferring the water-insoluble coloring matter thus sublimed to the material.

The heat treatment in the transfer step typically includes dry heat treatment at about 190 to 200°C.

The preferred intermediate recording medium is one in which the water-insoluble coloring matter in the ink droplets adhering to the intermediate recording medium does not aggregate on its surface and does not interfere with the sublimation of the water-insoluble coloring matter when sublimation transfer is performed. Such an intermediate recording medium can be selected from types of paper and board and processed products as well as cellophane. The types of paper and board and processed products are described in [JIS P 0001:1998 (Confirmed in 2008, revised on March 20, 1998, published by the Japan Standards Institute)], "3. Classification f) Types of Paper and Board and Processed Products" on pp. 28-47 (Nos. 6001 to 6284, provided that No. 6235 "oil resistance", 6263 "flute", 6273 "molded pulp products", 6276 "carbon paper", 6277 "multicopy business form", 6278 "carbonized forms" are excluded). Hereinafter, the "types of paper and board and processed products; and cellophane" are referred to as "paper, etc.". Of these papers, etc., any of them can be used as the intermediate recording medium as long as it can be used for sublimation transfer. Note that, as described above, since heat treatment is usually performed at about 190 to 210°C when sublimation transfer is performed, it is preferable that the intermediate recording medium described above be stable during heat treatment.

### EXAMPLES

In the following, the present invention is explained in more detail by way of the Examples; however, the present invention is not limited to these Examples. Unless otherwise indicated in the Examples, "part(s)" and "%" mean part(s) by mass and % by mass, respectively.

### [Preparation Example 1: Preparation of Dispersant 1]

25 parts of Joncryl 678 (manufactured by BASF) as the polymer-based dispersant, 8.0 parts of a 48% aqueous sodium hydroxide solution, 71.8 parts of ion-exchanged water, 0.1 parts of Proxel GXL (manufactured by Lonza), and 0.1 parts of Surfynol 104 (manufactured by Air Products Japan Co., Ltd.) were mixed, and the mixture was heated to 80 to 90°C and stirred for 10 hours to obtain a 25% aqueous solution of Joncryl 678 (dispersant 1).

### [Preparation Example 2: Preparation of dispersant 2]

25 parts of Joncryl 690 (manufactured by BASF) as the polymer-based dispersant, 9.0 parts of a 48% aqueous sodium hydroxide solution, 71.8 parts of ion-exchanged water, 0.1 parts of Proxel GXL (manufactured by Lonza), and 0.1 parts of Surfynol 104 (manufactured by Air Products Japan Co., Ltd.) were mixed, and the mixture was heated to 80 to 90°C and stirred for 10 hours to obtain a 25% aqueous solution of Joncryl 690 (dispersant 2).

### [Preparation Example 3: Preparation of dispersant 3]

A mixture consisting of 45 parts of Lavelin W40 (40% aqueous solution of sodium naphthalene sulfonate formalin condensate, manufactured by DKS Co., Ltd.) as the anionic dispersant, 2 parts of NIKKOL BPS-30 (EO (30 mol) adduct of phytosterol, manufactured by Nikko Chemicals Co., Ltd.) as the nonionic dispersant, 0.15 parts of sodium alginate (manufactured by Junsei Chemical, Co., Ltd.), and 23 parts of ion-exchanged water was subjected to a dispersing treatment in a sand mill using glass beads with a diameter of 0.2 mm for about 15 hours under cooling. Calcium lactate (0.83 parts) was added to the obtained solution, and then filtered through a glass fiber filter paper GC-50 (manufactured by Toyo Roshi Kaisha Ltd.) to remove coarse particles, thereby obtaining an aqueous dispersion liquid.

### [Preparation Example 4: Preparation of 4% aqueous sodium alginate solution]

A mixture consisting of 4 parts of sodium alginate (manufactured by Junsei Chemical Co., Ltd.), 0.1 parts of Proxel GXL (manufactured by Lonza Co., Ltd.), and 95.9 parts of ion-exchanged water was stirred at room temperature to obtain a 4% aqueous sodium alginate solution.

### [Preparation Example 5: Preparation of 4% aqueous SKAT-ULV solution]

A mixture consisting of 4 parts of SKAT-ULV (manufactured by Kimica Corporation), 0.1 parts of Proxel GXL (manufactured by Lonza Co., Ltd.), and 95.9 parts of ion-exchanged water was stirred at room temperature to obtain a 4% aqueous SKAT-ULV solution.

### [Preparation Example 6: Preparation of 4% aqueous _{K}carrageenan solution]

A mixture consisting of 4 parts of κ-carrageenan (manufactured by Tokyo Chemical Industry Co., Ltd.), 0.1 parts of Proxel GXL (manufactured by Lonza Co., Ltd.), and 95.9 parts of ion-exchanged water was stirred at room temperature to obtain a 4% aqueous κ-carrageenansolution.

### [Preparation 7: Preparation of 4% aqueous Cellogen WS-A solution]

A mixture consisting of 4 parts of Cellogen WS-A (manufactured by DKS Co., Ltd.), 0.1 parts of Proxel GXL (manufactured by Lonza Co., Ltd.), and 95.9 parts of ion-exchanged water was stirred at room temperature to obtain a 4% aqueous Cellogen WS-A solution.

### [Examples 1 to 21: Preparation of dispersion liquids 1 to 21]

Glass beads with a diameter of 0.2 mm were added to mixed liquids each obtained by mixing the respective components described in Tables 1 to 3 below (except for the polyvalent metal salt), and the mixtures were subjected to a dispersion treatment in a sand mill for about 15 hours under water cooling. After the dispersion treatment, a 4% aqueous calcium lactate solution or a 30% aqueous calcium chloride solution was added, and the dispersion treatment was performed for about 2 hours. Then, the obtained dispersion liquids were filtered through a glass fiber filter paper GC-50 (pore diameter of the filter: 0.5 µm manufactured by Toyo Roshi Kaisha Ltd.) to remove components having a large particle size, thereby obtaining dispersion liquids 1 to 21.

### [Comparative Examples 1 to 11: Preparation of dispersion liquids 22 to 32]

Glass beads with a diameter of 0.2 mm were added to mixed liquids each obtained by mixing the respective components described in Tables 4 to 5 below, and the mixtures were subjected to a dispersion treatment in a sand mill for about 15 hours under water cooling. The obtained dispersion liquids were filtered through a glass fiber filter paper GC-50 (pore diameter of the filter: 0.5 µm manufactured by Toyo Roshi Kaisha Ltd.) to remove components having a large particle size, thereby obtaining dispersion liquids 22 to 32.

Abbreviations and the like in Tables 1 to 5 below have the following meanings.
DR60: C.I. Disperse Red 60
DY54: C.I. Disperse Yellow 54
DOr25: C.I. Disperse Orange 25
DOr60: C.I. Disperse Orange 60
DB56: C.I. Disperse Blue 56
DB359: C.I. Disperse Blue 359
DB360: C.I. Disperse Blue 360
DR364: C.I. Disperse Red 364
DY232: C.I. Disperse Yellow 232
Vanillex N: Lignin sulfonic acid (manufactured by Nippon Paper Industries Co., Ltd.)
Lavelin W40: Sodium naphthalene sulfonate formalin condensate (manufactured by DKS Co., Ltd.)
BPS-30: NIKKOL BPS-30 (manufactured by Nikko Chemicals Co., Ltd.)
Surfynol 104: Acetylene glycol surfactant (manufactured by Air Products Japan Co., Ltd.)
Proxel GXL (S) (manufactured by Lonza)
Sodium alginate (manufactured by Junsei Chemical Co., Ltd.) SKAT-ULV: Sodium alginate (manufactured by Kimica Corporation) κ-carrageenan(manufactured by Tokyo Chemical Industry Co., Ltd. )
Cellogen WS-A: Sodium carboxy methylcellulose (manufactured by DKS Co., Ltd.)
Calcium lactate (manufactured by Junsei Chemical Co., Ltd.)

**[Table 1]**

| | | Example 1 | Example 2 | Example 3 | Example 4 |
|---|---|---|---|---|---|
| | | Dispersion liquid 1 | Dispersion liquid 2 | Dispersion liquid 3 | Dispersion liquid 4 |
| Water-insoluble coloring matter | DR60 | 15 | 15 | 15 | 15 |
| | DY54 | | | | |
| | DOr25 | | | | |
| | DOr60 | | | | |
| | DB56 | | | | |
| | DB359 | | | | |
| | DB360 | | | | |
| | DR364 | | | | |
| | DY232 | | | | |
| Dispersant | Dispersant 1 | 18.00 | 18.00 | 18.00 | 18.00 |
| | Dispersant 2 | | | | |
| | Dispersant 3 | | | | |
| | Vanillex N | | | | |
| | 40% aqueous Lavelin W40 solution | | | | |
| | BPS-30 | | | | |
| Water-soluble polysaccharide compound | 4% aqueous sodium alginate solution | 0.25 | 3.75 | 12.5 | 25 |
| | 4% aqueous SKAT-ULV solution | | | | |
| | 4% aqueous κ-carrageenan solution | | | | |
| | 4% aqueous Cellogen WS-A solution | | | | |
| Polyvalent metal salt | 4% aqueous calcium lactate solution | 1.39 | 20.8 | | |
| | 30% aqueous calcium chloride solution | | | 6.2 | 12.3 |
| Defoaming agent | Surfynol 104 | 0.01 | 0.01 | 0.01 | 0.01 |
| Preservative | Proxel GXL (S) | 0.1 | 0.1 | 0.1 | 0.1 |
| Water | | 65.25 | 42.34 | 48.19 | 29.59 |
| Dispersion liquid initial particle diameter | | 5 | 5 | 4 | 3 |
| Dispersion liquid particle diameter over time | | 5 | 3 | 4 | 3 |
| Dispersion liquid storage stability | | 5 | 4 | 5 | 4 |

| | | Example 5 | Example 6 | Example 7 | |
|---|---|---|---|---|---|
| | | Dispersion liquid 5 | Dispersion liquid 6 | Dispersion liquid 7 | |
| Water-insoluble coloring matter | DR60 | 15 | 15 | 15 | |
| | DY54 | | | | |
| | DOr25 | | | | |
| | DOr60 | | | | |
| | DB56 | | | | |
| | DB359 | | | | |
| | DB360 | | | | |
| | DR364 | | | | |
| | DY232 | | | | |
| Dispersant | Dispersant 1 | | | | |
| | Dispersant 2 | 18.00 | | | |
| | Dispersant 3 | | 18.00 | | |
| | Vanillex N | | | | |
| | 40% aqueous Lavelin W40 solution | | | 11.3 | |
| | BPS-30 | | | 0.9 | |
| Water-soluble polysaccharide compound | 4% aqueous sodium alginate solution | 3.75 | 3.75 | 3.75 | |
| | 4% aqueous SKAT-ULV solution | | | | |
| | 4% aqueous κ-carrageenan solution | | | | |
| | 4% aqueous Cellogen WS-A solution | | | | |
| Polyvalent metal salt | 4% aqueous calcium lactate solution | 20.8 | 20.8 | 20.8 | |
| | 30% aqueous calcium chloride solution | | | | |
| Defoaming agent | Surfynol 104 | 0.01 | 0.01 | 0.01 | |
| Preservative | Proxel GXL (S) | 0.1 | 0.1 | 0.1 | |
| Water | | 42.34 | 42.34 | 48.14 | |
| Dispersion liquid initial particle diameter | | 4 | 5 | 5 | |
| Dispersion liquid particle diameter over time | | 4 | 5 | 5 | |
| Dispersion liquid storage stability | | 4 | 5 | 5 | |

**[Table 2]**

| | | Example 8 | Example 9 | Example 10 | Example 11 |
|---|---|---|---|---|---|
| | | Dispersion liquid 8 | Dispersion liquid 9 | Dispersion liquid 10 | Dispersion liquid 11 |
| Water-insoluble coloring matter | DR60 | 15 | 15 | 15 | |
| | DY54 | | | | 15 |
| | DOr25 | | | | |
| | DOr60 | | | | |
| | DB56 | | | | |
| | DB359 | | | | |
| | DB360 | | | | |
| | DR364 | | | | |
| | DY232 | | | | |
| Dispersant | Dispersant 1 | 18.00 | 18.00 | 18.00 | 18.00 |
| | Dispersant 2 | | | | |
| | Dispersant 3 | | | | |
| | Vanillex N | | | | |
| | 40% aqueous Lavelin W40 solution | | | | |
| | BPS-30 | | | | |
| Water-soluble polysaccharide compound | 4% aqueous sodium alginate solution | | | | 3.75 |
| | 4% aqueous SKAT-ULV solution | 3.75 | | | |
| | 4% aqueous κ-carrageenan solution | | 3.75 | | |
| | 4% aqueous Cellogen WS-A solution | | | 3.75 | |
| Polyvalent metal salt | 4% aqueous calcium lactate solution | 20.8 | 20.8 | 20.8 | 20.8 |
| | 30% aqueous calcium chloride solution | | | | |
| Defoaming agent | Surfynol 104 | 0.01 | 0.01 | 0.01 | 0.01 |
| Preservative | Proxel GXL (S) | 0.1 | 0.1 | 0.1 | 0.1 |
| Water | | 42.34 | 42.34 | 42.34 | 42.34 |
| Dispersion liquid initial particle diameter | | 5 | 5 | 5 | 5 |
| Dispersion liquid particle diameter over time | | 5 | 5 | 5 | 4 |
| Dispersion liquid storage stability | | 5 | 5 | 5 | 4 |

| | | Example 12 | Example 13 | Example 14 | |
|---|---|---|---|---|---|
| | | Dispersion liquid 12 | Dispersion liquid 13 | Dispersion liquid 14 | |
| Water-insoluble coloring matter | DR60 | | | | |
| | DY54 | | | | |
| | DOr25 | 15 | | | |
| | DOr60 | | 15 | | |
| | DB56 | | | 15 | |
| | DB359 | | | | |
| | DB360 | | | | |
| | DR364 | | | | |
| | DY232 | | | | |
| Dispersant | Dispersant 1 | 18.00 | 18.00 | 18.00 | |
| | Dispersant 2 | | | | |
| | Dispersant 3 | | | | |
| | Vanillex N | | | | |
| | 40% aqueous Lavelin W40 solution | | | | |
| | BPS-30 | | | | |
| Water-soluble polysaccharide compound | 4% aqueous sodium alginate solution | 3.75 | 3.75 | 3.75 | |
| | 4% aqueous SKAT-ULV solution | | | | |
| | 4% aqueous κ-carrageenan solution | | | | |
| | 4% aqueous Cellogen WS-A solution | | | | |
| Polyvalent metal salt | 4% aqueous calcium lactate solution | 20.8 | 20.8 | 20.8 | |
| | 30% aqueous calcium chloride solution | | | | |
| Defoaming agent | Surfynol 104 | 0.01 | 0.01 | 0.01 | |
| Preservative | Proxel GXL (S) | 0.1 | 0.1 | 0.1 | |
| Water | | 42.34 | 42.34 | 42.34 | |
| Dispersion liquid initial particle diameter | | 5 | 4 | 4 | |
| Dispersion liquid particle diameter over time | | 5 | 4 | 4 | |
| Dispersion liquid storage stability | | 5 | 4 | 4 | |

**[Table 3]**

| | | Example 15 | Example 16 | Example 17 | Example 18 |
|---|---|---|---|---|---|
| | | Dispersion liquid 15 | Dispersion liquid 16 | Dispersion liquid 17 | Dispersion liquid 18 |
| Water-insoluble coloring matter | DR60 | | | | |
| | DY54 | | | | |
| | DOr25 | | | | |
| | DOr60 | | | | |
| | DB56 | | | | |
| | DB359 | 15 | | | |
| | DB360 | | 15 | | |
| | DR364 | | | 15 | |
| | DY232 | | | | 15 |
| Dispersant | Dispersant 1 | 18.00 | 18.00 | 18.00 | 18.00 |
| | Dispersant 2 | | | | |
| | Dispersant 3 | | | | |
| | Vanillex N | | | | |
| | 40% aqueous Lavelin W40 solution | | | | |
| | BPS-30 | | | | |
| Water-soluble polysaccharide compound | 4% aqueous sodium alginate solution | 3.75 | 3.75 | 3.75 | 3.75 |
| | 4% aqueous SKAT-ULV solution | | | | |
| | 4% aqueous κ-carrageenan solution | | | | |
| | 4% aqueous Cellogen WS-A solution | | | | |
| Polyvalent metal salt | 4% aqueous calcium lactate solution | 20.8 | 20.8 | 20.8 | 20.8 |
| | 30% aqueous calcium chloride solution | | | | |
| Defoaming agent | Surfynol 104 | 0.01 | 0.01 | 0.01 | 0.01 |
| Preservative | Proxel GXL (S) | 0.1 | 0.1 | 0.1 | 0.1 |
| Water | | 42.34 | 42.34 | 42.34 | 42.34 |
| Dispersion liquid initial particle diameter | | 5 | 5 | 5 | 5 |
| Dispersion liquid particle diameter over time | | 5 | 5 | 4 | 4 |
| Dispersion liquid storage stability | | 5 | 5 | 4 | 4 |

| | | Example 19 | Example 20 | Example 21 | |
|---|---|---|---|---|---|
| | | Dispersion liquid 19 | Dispersion liquid 20 | Dispersion liquid 21 | |
| Water-insoluble coloring matter | DR60 | 15 | 15 | 15 | |
| | DY54 | | | | |
| | DOr25 | | | | |
| | DOr60 | | | | |
| | DB56 | | | | |
| | DB359 | | | | |
| | DB360 | | | | |
| | DR364 | | | | |
| | DY232 | | | | |
| Dispersant | Dispersant 1 | 9.00 | | | |
| | Dispersant 2 | | | | |
| | Dispersant 3 | 9.00 | | 9.00 | |
| | Vanillex N | | 4.50 | | |
| | 40% aqueous Lavelin W40 solution | | | 5.7 | |
| | BPS-30 | | | 0.9 | |
| Water-soluble polysaccharide compound | 4% aqueous sodium alginate solution | 3.75 | 3.75 | 3.75 | |
| | 4% aqueous SKAT-ULV solution | | | | |
| | 4% aqueous κ-carrageenan solution | | | | |
| | 4% aqueous Cellogen WS-A solution | | | | |
| Polyvalent metal salt | 4% aqueous calcium lactate solution | 20.8 | 20.8 | 20.8 | |
| | 30% aqueous calcium chloride solution | | | | |
| Defoaming agent | Surfynol 104 | 0.01 | 0.01 | 0.01 | |
| Preservative | Proxel GXL (S) | 0.1 | 0.1 | 0.1 | |
| Water | | 42.34 | 55.84 | 44.74 | |
| Dispersion liquid initial particle diameter | | 4 | 5 | 4 | |
| Dispersion liquid particle diameter over time | | 4 | 5 | 4 | |
| Dispersion liquid storage stability | | 4 | 4 | 4 | |

**[Table 4]**

| | | Comparative Example 1 | Comparative Example 2 | Comparative Example 3 |
|---|---|---|---|---|
| | | Dispersion liquid 22 | Dispersion liquid 23 | Dispersion liquid 24 |
| Water-insoluble coloring matter | DR60 | 15 | 15 | 15 |
| | DY54 | | | |
| | DOr25 | | | |
| | DOr60 | | | |
| | DB56 | | | |
| | DB359 | | | |
| | DB360 | | | |
| | DR364 | | | |
| | DY232 | | | |
| Dispersant | Dispersant 1 | 18.00 | | |
| | Dispersant 2 | | 18.00 | |
| | Dispersant 3 | | | |
| | Vanillex N | | | |
| | 40% aqueous Lavelin W40 solution | | | 11.3 |
| | BPS-30 | | | 0.9 |
| Water-soluble polysaccharide compound | 4% aqueous sodium alginate solution | | | |
| | 4% aqueous SKAT-ULV solution | | | |
| | 4% aqueous κ-carrageenan solution | | | |
| | 4% aqueous Cellogen WS-A solution | | | |
| Polyvalent metal salt | 4% aqueous calcium lactate solution | | | |
| | 30% aqueous calcium chloride solution | | | |
| Defoaming agent | Surfynol 104 | 0.01 | 0.01 | 0.01 |
| Preservative | Proxel GXL (S) | 0.1 | 0.1 | 0.1 |
| Water | | 66.89 | 66.89 | 72.69 |
| Dispersion liquid initial particle diameter | | 4 | 5 | 5 |
| Dispersion liquid particle diameter over time | | 3 | 3 | 3 |
| Dispersion liquid storage stability | | 1 | 1 | 2 |

| | | Comparative Example 4 | Comparative Example 5 | Comparative Example 6 |
|---|---|---|---|---|
| | | Dispersion liquid 25 | Dispersion liquid 26 | Dispersion liquid 27 |
| Water-insoluble coloring matter | DR60 | | | |
| | DY54 | 15 | | |
| | DOr25 | | 15 | |
| | DOr60 | | | 15 |
| | DB56 | | | |
| | DB359 | | | |
| | DB360 | | | |
| | DR364 | | | |
| | DY232 | | | |
| Dispersant | Dispersant 1 | 18.00 | 18.00 | 18.00 |
| | Dispersant 2 | | | |
| | Dispersant 3 | | | |
| | Vanillex N | | | |
| | 40% aqueous Lavelin W40 solution | | | |
| | BPS-30 | | | |
| Water-soluble polysaccharide compound | 4% aqueous sodium alginate solution | | | |
| | 4% aqueous SKAT-ULV solution | | | |
| | 4% aqueous κ-carrageenan solution | | | |
| | 4% aqueous Cellogen WS-A solution | | | |
| Polyvalent metal salt | 4% aqueous calcium lactate solution | | | |
| | 30% aqueous calcium chloride solution | | | |
| Defoaming agent | Surfynol 104 | 0.01 | 0.01 | 0.01 |
| Preservative | Proxel GXL (S) | 0.1 | 0.1 | 0.1 |
| Water | | 66.89 | 66.89 | 66.89 |
| Dispersion liquid initial particle diameter | | 4 | 5 | 4 |
| Dispersion liquid particle diameter over time | | 3 | 3 | 2 |
| Dispersion liquid storage stability | | 2 | 2 | 1 |

**[Table 5]**

| | | Comparative Example 7 | Comparative Example 8 | Comparative Example 9 |
|---|---|---|---|---|
| | | Dispersion liquid 28 | Dispersion liquid 29 | Dispersion liquid 30 |
| Water-insoluble coloring matter | DR60 | | | |
| | DY54 | | | |
| | DOr25 | | | |
| | DOr60 | | | |
| | DB56 | 15 | | |
| | DB359 | | 15 | |
| | DB360 | | | 15 |
| | DR364 | | | |
| | DY232 | | | |
| Dispersant | Dispersant 1 | 18.00 | 18.00 | 18.00 |
| | Dispersant 2 | | | |
| | Dispersant 3 | | | |
| | Vanillex N | | | |
| | 40% aqueous Lavelin W40 solution | | | |
| | BPS-30 | | | |
| Water-soluble polysaccharide compound | 4% aqueous sodium alginate solution | | | |
| | 4% aqueous SKAT-ULV solution | | | |
| | 4% aqueous κ-carrageenan solution | | | |
| | 4% aqueous Cellogen WS-A solution | | | |
| Polyvalent metal salt | 4% aqueous calcium lactate solution | | | |
| | 30% aqueous calcium chloride solution | | | |
| Defoaming agent | Surfynol 104 | 0.01 | 0.01 | 0.01 |
| Preservative | Proxel GXL (S) | 0.1 | 0.1 | 0.1 |
| Water | | 66.89 | 66.89 | 66.89 |
| Dispersion liquid initial particle diameter | | 4 | 5 | 5 |
| Dispersion liquid particle diameter over time | | 1 | 2 | 2 |
| Dispersion liquid storage stability | | 1 | 1 | 2 |

| | | | Comparative Example 10 | Comparative Example 11 |
|---|---|---|---|---|
| | | | Dispersion liquid 31 | Dispersion liquid 32 |
| Water-insoluble coloring matter | DR60 | | | |
| | DY54 | | | |
| | DOr25 | | | |
| | DOr60 | | | |
| | DB56 | | | |
| | DB359 | | | |
| | DB360 | | | |
| | DR364 | | 15 | |
| | DY232 | | | 15 |
| Dispersant | Dispersant 1 | | 18.00 | 18.00 |
| | Dispersant 2 | | | |
| | Dispersant 3 | | | |
| | Vanillex N | | | |
| | 40% aqueous Lavelin W40 solution | | | |
| | BPS-30 | | | |
| Water-soluble polysaccharide compound | 4% aqueous sodium alginate solution | | | |
| | 4% aqueous SKAT-ULV solution | | | |
| | 4% aqueous κ-carrageenan solution | | | |
| | 4% aqueous Cellogen WS-A solution | | | |
| Polyvalent metal salt | 4% aqueous calcium lactate solution | | | |
| | 30% aqueous calcium chloride solution | | | |
| Defoaming agent | Surfynol 104 | | 0.01 | 0.01 |
| Preservative | Proxel GXL (S) | | 0.1 | 0.1 |
| Water | | | 66.89 | 66.89 |
| Dispersion liquid initial particle diameter | | | 4 | 4 |
| Dispersion liquid particle diameter over time | | | 2 | 2 |
| Dispersion liquid storage stability | | | 2 | 2 |

### [Evaluation of dispersion liquids]

The dispersion liquids 1 to 32 obtained as described above were evaluated for dispersion liquid initial particle diameters, dispersion liquid particle diameters over time, and dispersion liquid storage stability based on the following evaluation methods. Results are shown in Tables 1 to 5 above.

### (Dispersion liquid initial particle size)

Water was added to each of the dispersion liquids 1 to 32 of the Examples and Comparative Examples to dilute them 1,000 times, and the volume average particle diameter (D50) was measured using a Microtrack UPA (manufactured by Nikkiso Co., Ltd.), and the obtained value was defined as the dispersion liquid initial particle diameter. The evaluation criteria are as follows. Rank 2 and below are practically unacceptable levels.

### - Evaluation Criteria -

Rank 5: The dispersion liquid initial particle diameter is less than 100 nm.
Rank 4: The dispersion liquid initial particle diameter is 100 nm or more and less than 120 nm.
Rank 3: The dispersion liquid initial particle diameter is 120 nm or more and less than 150 nm.
Rank 2: The dispersion liquid initial particle diameter is 150 nm or more and less than 180 nm.
Rank 1: The dispersion liquid initial particle diameter is 180 nm or more.

### (Dispersion liquid particle diameters over time)

The dispersion liquids 1 to 32 (100 g each) of the Examples and the Comparative Examples were sealed in a glass bottle and left at 60°C for 14 days. Water was added to each of the dispersion liquids after standing to dilute them 1,000 times, and the volume average particle diameter (D50) was measured using a microtrack UPA (manufactured by Nikkiso Co., Ltd.), and the obtained value was defined as the dispersion liquid particle diameter over time. The evaluation criteria are as follows. Rank 2 and below are practically unacceptable levels.

### - Evaluation Criteria -

Rank 5: The dispersion liquid particle diameter over time is less than 100 nm.
Rank 4: The dispersion liquid particle diameter over time is 100 nm or more and less than 120 nm.
Rank 3: The dispersion liquid particle diameter over time is 120 nm or more and less than 150 nm.
Rank 2: The dispersion liquid particle diameter over time is 150 nm or more and less than 180 nm.
Rank 1: The dispersion liquid particle diameter over time is 180 nm or more.

### (Dispersion liquid storage stability)

Water was added to each of the dispersion liquids 1 to 32 of the Examples and the Comparative Examples to dilute them 10,000 times, and an absorbance at the maximum absorption wavelength at 400 to 780 nm was measured. Also, the dispersion liquids 1 to 32 (100 g each) were sealed in glass bottles and left at 60°C for 14 days. Water was added to each of the dispersion liquids after standing and diluted 10,000 times, and an absorbance at the maximum absorption wavelength was similarly measured. The absorbance after standing was calculated, regarding the absorbance before standing as 100%, and the obtained value was used to evaluate the dispersion liquid storage stability. The evaluation criteria are as follows. Rank 2 and below are practically unacceptable levels.

### - Evaluation Criteria -

Rank 5: The absorbance after standing is 95% or more.
Rank 4: The absorbance after standing is 90% or more and less than 95%.
Rank 3: The absorbance after standing is 80% or more and less than 90%.
Rank 2: The absorbance after standing is 60% or more and less than 80%.
Rank 1: The absorbance after standing is less than 60%.

From the results of Tables 1 to 5 above, it is apparent that the dispersion liquids 1 to 21 of the Examples are dispersion liquids excellent in particle diameter stability over time and storage stability.

### [Examples 22 to 42: Preparation of inks 1 to 21]

The respective components described in Tables 6 to 8 below were mixed and stirred for 30 minutes, and then each of the resulting mixtures was filtered through a glass fiber filter paper GC-50 (manufactured by Toyo Roshi Kaisha Ltd.) to obtain inks 1 to 21 each having a dye content of 5%.

### [Comparative Examples 12 to 22: Preparation of inks 22 to 32]

Each of the components described in Tables 9 to 10 below was mixed and stirred for 30 minutes, and then filtered through a glass fiber filter paper GC-50 (manufactured by Toyo Roshi Kaisha Ltd.) to prepare inks 22 to 32 each having a dye content of 5%.

The abbreviations and the like in Tables 6 to 10 below have the following meanings.
BYK348: Polyether-modified polydimethylsiloxane (manufactured by Byk-Chemie GmbH)
Gly: Glycerin
TEGMME: Triethylene glycol monomethyl ether

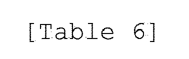

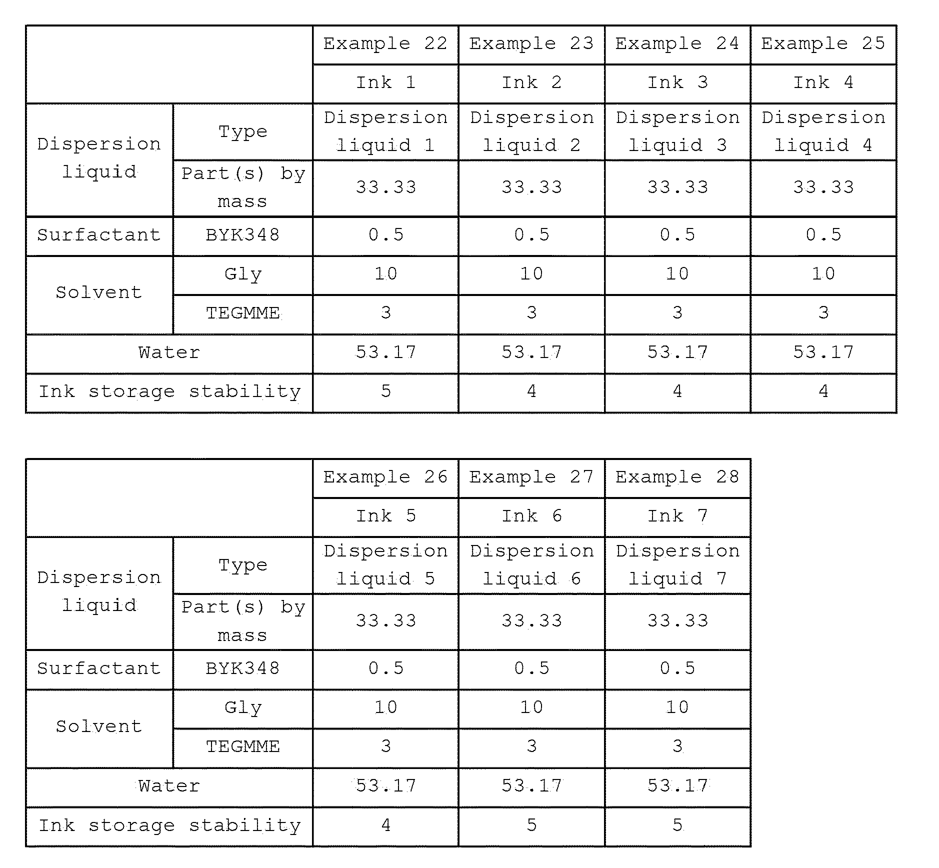

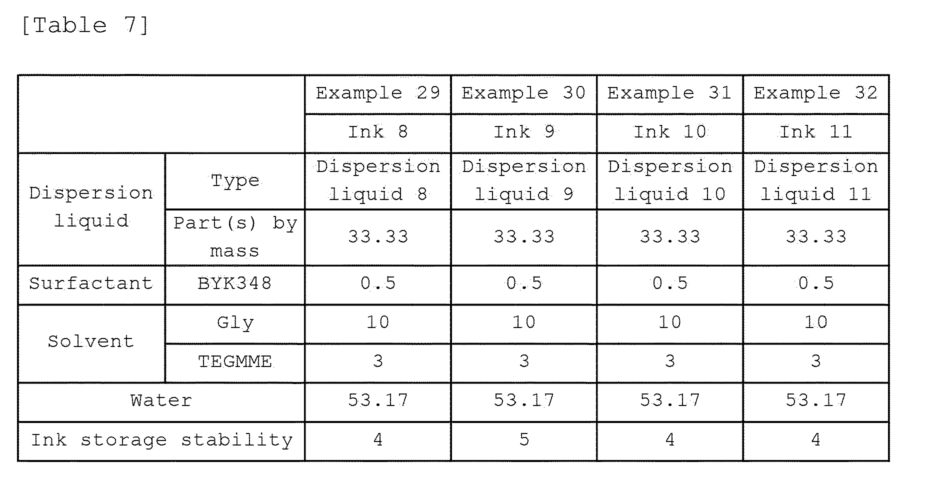

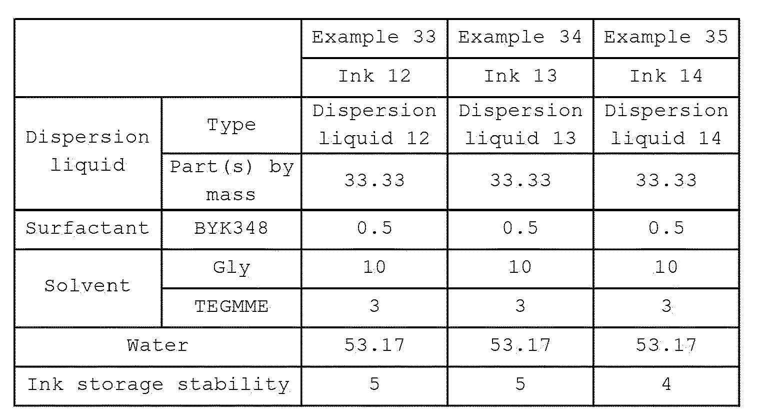

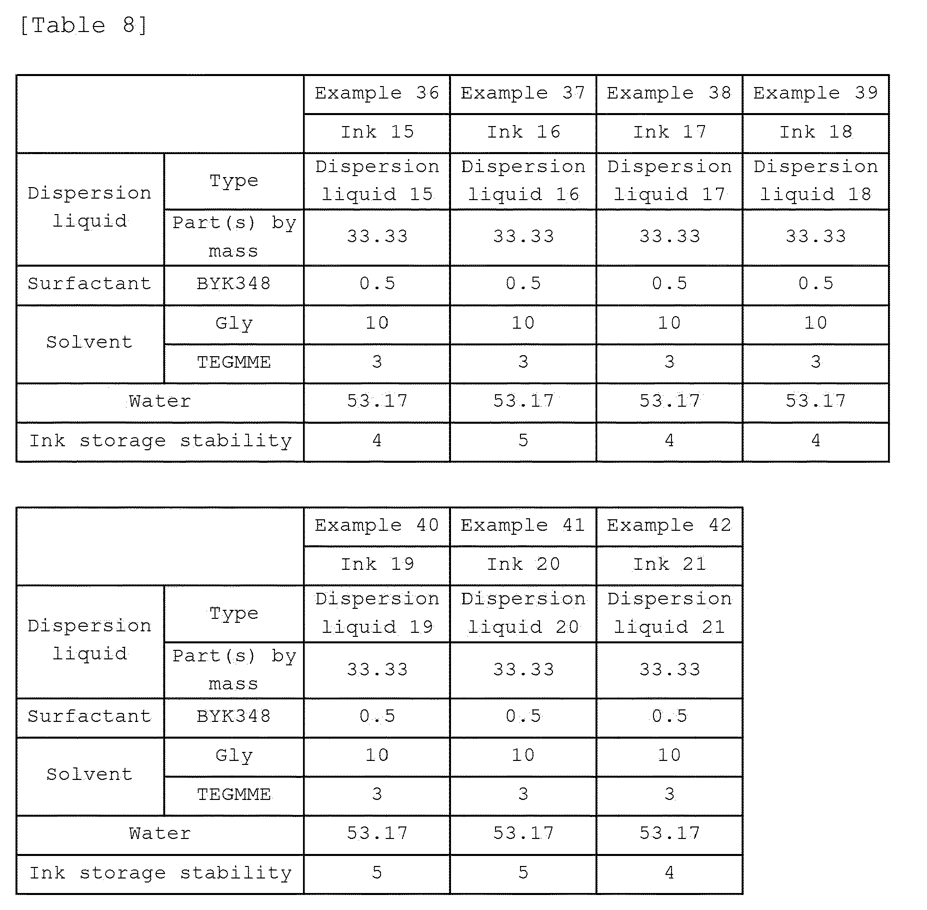

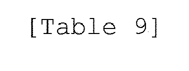

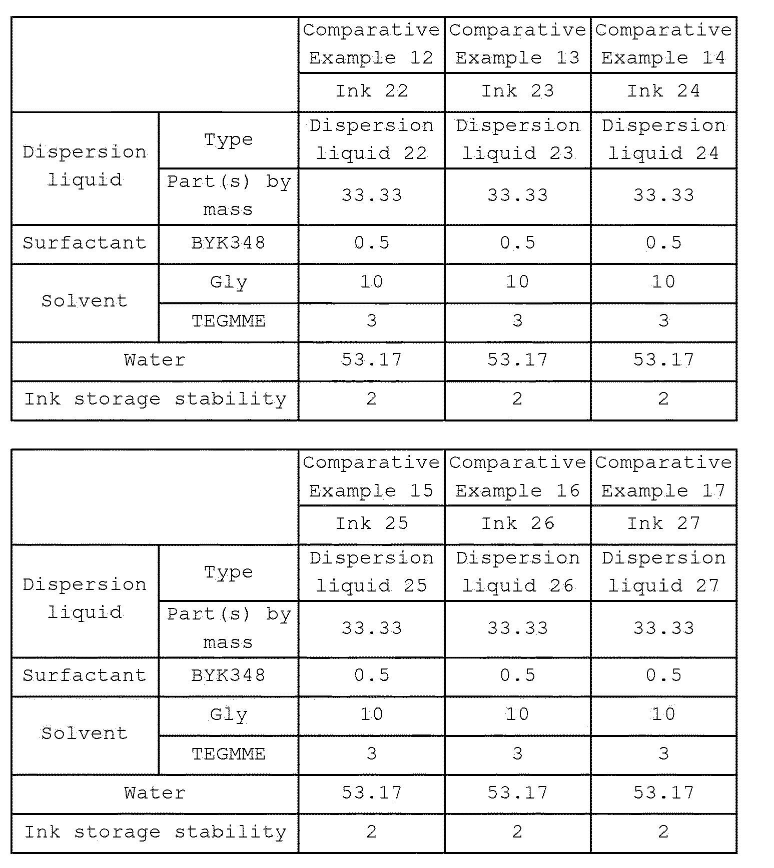

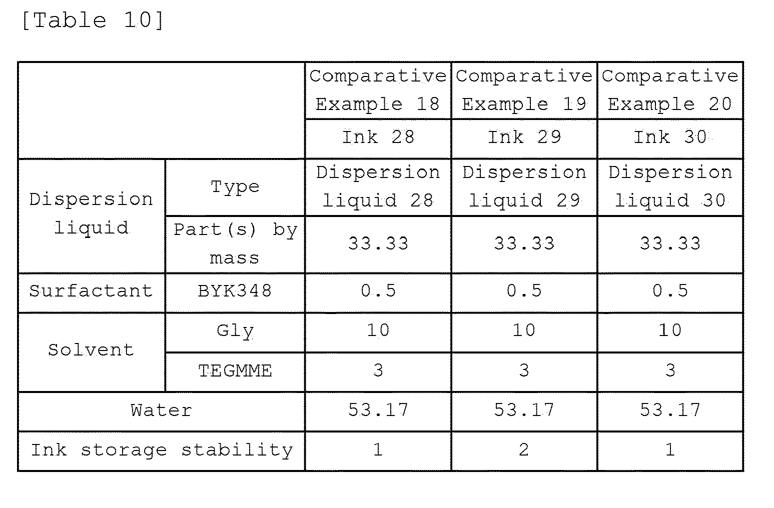

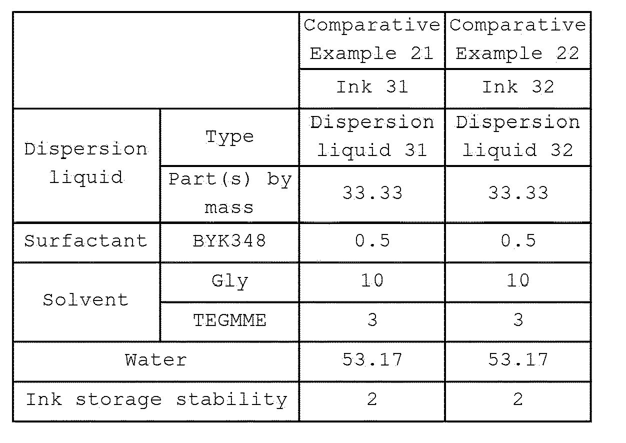

### [Evaluation of ink]

The ink storage stability was evaluated for the inks 1 to 32 obtained as described above by the following evaluation method. Results are shown in Tables 6 to 10 above.

### (Ink storage stability)

Water was added to each of the inks 1 to 32 of the Examples and the Comparative Examples to dilute them 10,000 times, and an absorbance at the maximum absorption wavelength at 400 to 780 nm was measured. Inks 1 to 32 (100 g each) were also sealed in glass bottles and left at 60°C for 14 days. Water was added to the inks 1 to 32 after standing and diluted 10,000 times, and an absorbance at the maximum absorption wavelength was measured in the same manner. The absorbance after standing was calculated regarding the absorbance before standing as 100%, and the obtained value was used to evaluate the storage stability of the ink. The evaluation criteria are as follows. Rank 2 and below are practically unacceptable levels.

### - Evaluation Criteria -

Rank 5: The absorbance after standing is 95% or more.
Rank 4: The absorbance after standing is 90% or more and less than 95%.
Rank 3: The absorbance after standing is 80% or more and less than 90%.
Rank 2: The absorbance after standing is 60% or more and less than 80%.
Rank 1: The absorbance after standing is less than 60%.

From the results of Tables 6 to 10 above, it is apparent that the inks 1 to 21 of the Examples are inks having excellent storage stability.

### [Preparation of dyed fabric]

Using the inks 1 to 21 of the Examples shown in Tables 6 to 8 above, a solid pattern was printed on a transfer paper, which is an intermediate recording medium, by an ink-jet printer (manufactured by Seiko Epson Co., Ltd., PX-105). An adhered portion of the ink in this printed transfer paper was cut into 35 cm × 40 cm. After superimposing an ink adhering surface of the transfer paper after cutting and polyester fabric (pongee) having the same size, heat treatment was performed using a transfer press machine (manufactured by Solar Seiki Co., Ltd., TP-600A2) under a condition of 200°C for 60 seconds, and sublimation transfer dyeing was performed from the transfer paper to the polyester fabric. As a result, respective pieces of polyester fabric could obtain the desired color.

## Claims

1. A dispersion liquid composition for ink, comprising a water-insoluble coloring matter, a water-soluble polysaccharide compound, a polyvalent metal salt, a dispersant, and water.

2. The dispersion liquid composition for ink according to claim 1, wherein the water-insoluble coloring matter includes at least one selected from the group consisting of a disperse dye and an oil-soluble dye.

3. The dispersion liquid composition for ink according to claim 1 or 2, wherein the water-soluble polysaccharide compound includes at least one selected from the group consisting of alginic acid compounds, pectin compounds, carrageenan compounds, carboxymethylcellulose compounds, and agar.

4. The dispersion liquid composition for ink according to any one of claims 1 to 3, wherein the polyvalent metal salt includes a salt of at least one metal selected from the group consisting of Ca, Mg, Ti, Al, Zn, Fe, Co, Ni, and Cu.

5. The dispersion liquid composition for ink according to any one of claims 1 to 4, wherein the dispersant includes at least one selected from the group consisting of an anionic dispersant, a nonionic dispersant, and a polymer-based dispersant.

6. The dispersion liquid composition for ink according to claim 5, wherein the anionic dispersant includes at least one selected from the group consisting of a formalin condensate of a β-naphthalenesulfonate salt, a formalin condensate of an alkylnaphthalenesulfonate salt, and a formalin condensate of creosote oil sulfonate salt.

7. The dispersion liquid composition for ink according to claim 5 or 6, wherein the nonionic dispersant includes at least one selected from the group consisting of ethylene oxide adducts of phytosterols and ethylene oxide adducts of cholestanols.

8. The dispersion liquid composition for ink according to any one of claims 5 to 7, wherein the polymer-based dispersant includes a styrene-(meth)acrylic copolymer.

9. The dispersion liquid composition for ink according to any one of claims 1 to 8, further comprising a defoaming agent.

10. The dispersion liquid composition for ink according to any one of claims 1 to 9, further comprising a water-soluble organic solvent.

11. The dispersion liquid composition for ink according to any one of claims 1 to 10, further comprising a preservative.

12. The dispersion liquid composition for ink according to any one of claims 1 to 11, wherein the dispersion liquid composition for ink comprises particles each comprising the water-insoluble coloring matter, the water-soluble polysaccharide compound, and the polyvalent metal salt, and wherein a number average particle diameter of the particles is 10 to 500 nm.

13. An ink composition comprising the dispersion liquid composition for ink according to any one of claims 1 to 12.

14. An ink-jet printing method, comprising
performing printing by adhering a droplet of an ink to a recording medium using an ink-jet printer,
wherein the ink composition according to claim 13 is used as the ink.

15. An ink-jet printed article printed by the ink-jet printing method according to claim 14.

16. A sublimation transfer dyeing method, comprising:
heating the ink-jet printed article according to claim 15 and,
sublimating the water-insoluble coloring matter applied to the ink-jet printed article and transferring the water-insoluble coloring matter thus sublimed to an object to be dyed.

17. A sublimation transfer dyed article dyed by the sublimation transfer dyeing method according to claim 16.
